# EUROPEAN PATENT APPLICATION

(11) **EP 4 574 607 A1**
(43) Date of publication of application: **25.06.2025**
(21) Application number: 24219254.0
(22) Date of filing: 11.12.2024
(51) Int. Cl.: B60W 30/14, B60W 30/182

(54) **ADAPTING SETTINGS OF A VEHICLE BASED ON GEOFENCES**

(30) Priority: 22.12.2023 US 202363613913 P
(71) Applicant: Polaris Industries Inc., Medina, MN 55340 (US)
(72) Inventor: GLISSMEYER, Brandon D., Wyoming, MN 55092 (US); HETLAND, Jonathan M., Wyoming, MN 55092 (US); DECKARD, Aaron, D., Wyoming, MN 55092 (US); BIASCO, Seth A., Wyoming, MN 55092 (US); BUSSE, Timothy J., Maple Grove, MN 55369 (US); DIROFF, Nathaniel J., Novi, MN 58377 (US); SCOTT, Elaine M., Sunnyvale, CA 94085 (US); NUXOLL, Joe, San Jose, CA 95123 (US); LIU, Chiao George, Wyoming, MN 55092 (US); TRUSKOLASKI, Dylan T., Wyoming, MN 55092 (US)
(74) Representative: reuteler & cie SA

(57) **Abstract**

The invention relates to an Off-road vehicle (ORV). The vehicle includes a frame, one or more seats enclosed by the frame, a plurality of wheels operably coupled to the frame, and a controller. The controller includes a processor and memory storing instructions that, when executed by the processor, cause the controller to perform a set of operations. The set of operations includes: receiving an indication of a location of the vehicle, determining that the location of the vehicle corresponds to being within a geofence, and in response to the determination, enabling at least one of a low-speed vehicle (LSV) mode or a low sound pressure level (SPL) mode to restrict operation of the vehicle accordingly. The invention further relates to corresponding LSV and SPL mode activation methods.

## Description

### CROSS-REFERENCE TO RELATED APPLICATION

This application claims priority to U.S. Provisional Application No. 63/613,913, titled "Adapting Settings of a Vehicle Based on Geofences," filed on December 22, 2023, the entire disclosure of which is hereby incorporated by reference in its entirety.

### BACKGROUND

Some municipalities have regulations that require vehicles to have sound outputs below certain threshold. However, many vehicles, such as some off-road vehicles, generate sound outputs that exceed the certain thresholds. Further, some municipalities have regulations that require vehicles to have certain speed performance thresholds, such as to be registered as low-speed vehicles (LSVs). However, many vehicles, such as some off-road vehicles, have speed performances which exceed the certain speed performance thresholds. It is with respect to these and other general considerations that embodiments have been described. The embodiments described herein are not limited to solving the specific problems identified in the background.

### SUMMARY

Aspects of the present disclosure relate to methods and systems for adapting settings of a vehicle based on geofencing. For example, some aspects relate to methods and systems for configuring a low-speed vehicle (LSV) mode of a vehicle. As another example, some aspects relate to methods and systems for configuring a low sound pressure level (SPL) mode of a vehicle.

Some embodiments of the present disclosure provide a method for configuring a low-speed vehicle (LSV) mode of an off-road vehicle (ORV). The method includes: receiving an indication of a location of the ORV, determining that the location of the ORV corresponds to being within a geofence, and in response to the determination, enabling the LSV mode of the ORV.

Some embodiments of the present disclosure provide a method for configuring a low sound pressure level (SPL) mode of a vehicle. The method includes: receiving an indication of a location of the vehicle, determining that the location of the vehicle corresponds to being within a geofence, and in response to the determination, enabling the low SPL mode of the vehicle.

Some embodiments of the present disclosure provide a vehicle. The vehicle includes: a frame, one or more seats enclosed by the frame, a plurality of wheels operably coupled to the frame, and a controller. The controller includes a processor and memory storing instructions that, when executed by the processor, cause the controller to perform a set of operations. The set of operations include: receiving an indication of a location of the vehicle, determining that the location of the vehicle corresponds to being within a geofence, and in response to the determination, enabling at least one of a low-speed vehicle (LSV) mode or a low sound pressure level (SPL) mode, thereby restricting operation of the vehicle based on the corresponding geofence.

This summary is provided to introduce a selection of concepts in a simplified form that are further described below in the Detailed Description. This summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

### BRIEF DESCRIPTION OF THE DRAWINGS

Non-limiting and non-exhaustive examples are described with reference to the following Figures.
FIG. 1 illustrates an overview of an example user interface according to some aspects described herein.
FIG. 2 illustrates an example vehicle, according to some aspects described herein.
FIG. 3 illustrates an example method for configuring a low-speed vehicle (LSV) mode of a vehicle, according to some aspects described herein.
FIG. 4 illustrates an example method for configuring a low sound pressure level (SPL) mode of a vehicle, according to some aspects described herein.
FIG. 5 illustrates an example method for configuring a lighting mode of a vehicle, according to some aspects described herein.
FIG. 6 illustrates an example method for configuring an operation of a vehicle based on the vehicle's location, according to some aspects described herein.
FIG. 7A illustrates an example system for controlling vehicle operations based on the vehicle's location, according to some aspects described herein.
FIG. 7B illustrates an examples system for controlling vehicle operations based on the vehicle's location, according to some aspects described herein.
FIG. 8 illustrates an example system for controlling vehicle operations based on geographic location, according to some aspects described herein.
FIG. 9 illustrates an example grid with example vehicle mode data, according to some aspects described herein.
FIG. 10 illustrates an example method for controlling vehicle configurations based on geographic location, according to some aspects described herein.
FIG. 11 illustrates an overview of an example system, according to some aspects described herein.
FIG. 12 illustrates a block diagram illustrating example physical components of a computing device with which aspects of the disclosure may be practiced.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

Some municipalities have regulations that require vehicles to have certain speed performance thresholds, such as to be registered as low-speed vehicles (LSVs). However, many vehicles, such as some off-road vehicles (ORVs), have speed performances which exceed the certain speed performance thresholds. Therefore, there exists a need to configure an LSV mode on vehicles, such as ORVs.

In some examples, software has been developed to allow for enhanced location detection of a vehicle. Such enhanced location detection has enabled features that allow ORV operators to extend the usefulness of their vehicles while staying in compliance with national, international, and local registration and use requirements. For example, using geofencing, map-based data, navigation tools, and/or input data, a vehicle operator can have access to automated route planning and/or speed controls in areas, towns, cities, municipalities, and/or neighborhoods where registration requirements and/or ordinances exist for LSVs.

In some examples, geofencing is a location-based technology that creates virtual boundaries or perimeters around a specific geographic area (e.g., a municipality, a campground, a road/trail, etc.). These boundaries can be established using global positioning systems (GPS), radio-frequency identification (RFID), Wi-Fi, cellular data, Bluetooth, or other technologies which should be recognized by those of ordinary skill in the art. When a device enters or exits these predefined boundaries (e.g., the "geofences"), it can trigger indications and/or actions, such as on the device or on other device with which the device may be in communication.

For examples, mechanisms (e.g., systems, methods, and/or media) provided herein may enable automatic control of vehicle speeds upon entry into areas where LSV regulations exist. These areas may be associated with one or more geofences to detect when the vehicle has entered the specific area, such that the speed of the vehicle may be limited accordingly. Conversely, vehicle speed may no longer be controlled when exiting a geofence. As another example, mechanisms provided herein may allow operators of a vehicle to be directed to routes (e.g., portage routes) depending on whether LSV regulations limit use for the vehicle in areas encompassing, surrounding, and/or along the routes.

Typically, ORV's that exceed certain speed performance thresholds or lack certain equipment are unavailable to be certified for use on public roads or streets. Such limitations can be frustrating to ORV owners and limit the usability of their ORV's and/or negatively impact their experience operating the ORVs. Some mechanisms provided herein enable a safe and responsible solution for ORV customers to meet LSV requirements in certain areas. For vehicle owners in the ORV space that may need to portage between trail heads, mechanisms provided herein may help them to navigate unfamiliar areas, while staying in compliance with LSV regulations.

Some municipalities have regulations that require vehicles to have sound outputs below certain threshold. However, many vehicles, such as some off-road vehicles (ORVs), generate sound output that exceed the certain thresholds. Therefore, there exists a need to configure a low sounds-pressure-level (SPL) mode on a vehicle, such as an ORV.

SPL refers to refers to a measurement of the intensity or loudness of sound, often expressed in decibels (dB), generated by a vehicle or any other source. SPL can be used to quantify and describe the level of noise produced by various vehicle components, such as the engine, exhaust system, and other elements.

Some vehicles, such as ORVs may be considered relatively loud. To address the loudness of such vehicles, some counties, cities, and other municipalities have passed regulations or ordinances limiting the sound output of vehicles that pass through the counties, cities, or other municipalities. Some examples provided herein thus leverage geofencing and vehicle location technology (e.g., global positioning systems or "GPS", cellular positioning systems, Wi-Fi positioning systems, Bluetooth positioning systems, etc.) to configure an ORV according to the regulations/ordinances and thus help vehicle operators comply with local regulations/ordinances accordingly.

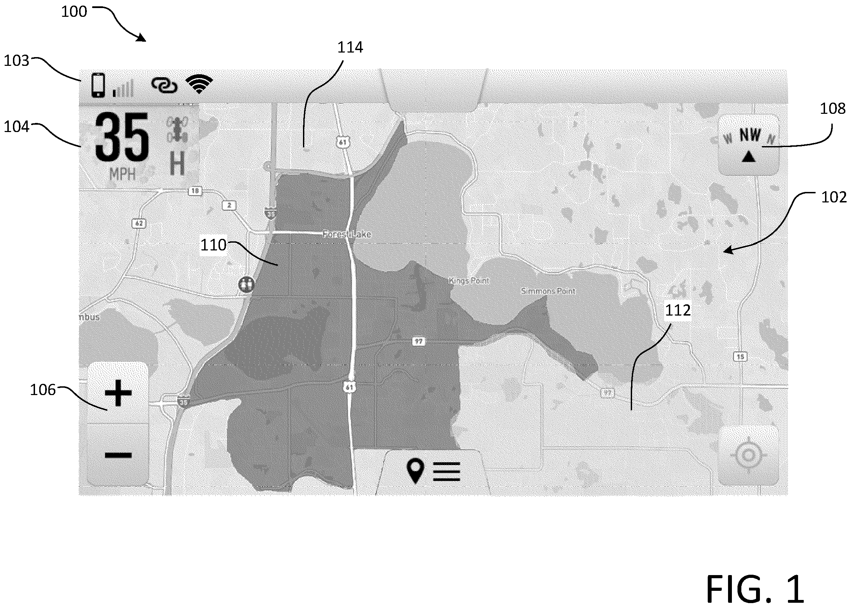

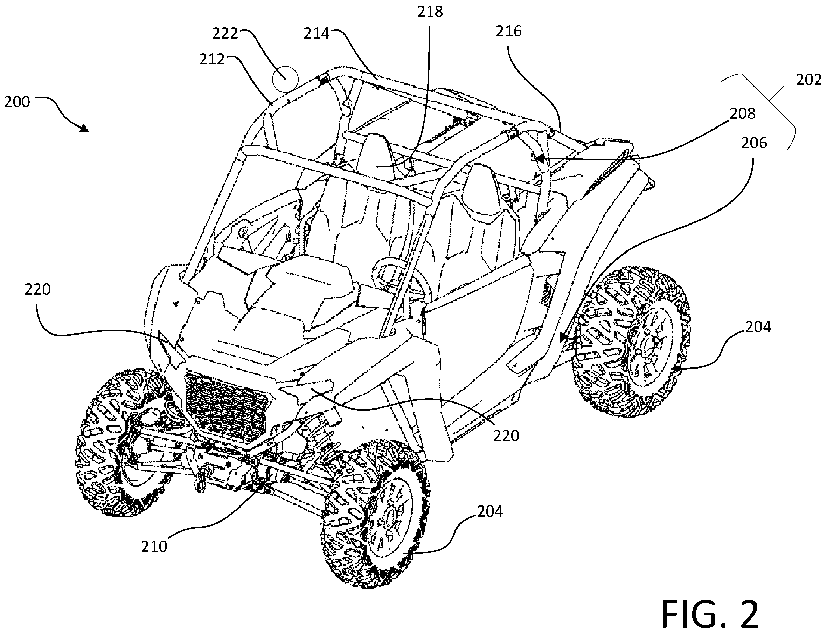

FIG. 1 illustrates an example user interface (UI) 100 according to some aspects described herein. In some examples, the UI 100 is a graphical user interface (GUI). In some examples, the UI 100 may be displayed by a display of a computing device, such as an infotainment center of a vehicle (e.g., vehicle 200 of FIG. 2) and/or a mobile computing device (e.g., of an occupant of the vehicle), among other examples.

In some examples, the GUI 100 includes a map 102 and a settings bar 103. The map 102 may display one or more roads, lakes, towns, points of interest, etc. Additional and/or alternative components which may be displayed on a map, such as the map 102, should be recognized by those of ordinary skill in the art. In some examples, the maps 102 reflects a location of the vehicle with which the UI 100 is associated.

In some examples, the settings bar 103 includes one or more connectivity settings of the UI 100. For example, the UI 100 (and/or vehicle associated with the UI 100) may be paired with a computing device. In some examples, the UI 100 may be connected to a computing device and/or remote server via an Ethernet connection, via a Universal Serial Bus (USB) connection, and/or via a Controller Area Network (CAN) bus, among other examples. Additionally, or alternatively, in some examples, the UI 100 is in wireless communication with the computing device and/or remote server, such as via a wireless communication network. In some examples, wireless communication network can be any suitable communication network or combination of communication networks. For example, communication network can include a Wi-Fi network (which can include one or more wireless routers, one or more switches, etc.), a peer-to-peer network (e.g., a Bluetooth or Bluetooth Low Energy network), a cellular network (e.g., a 3G network, a 4G network, a 5G network, etc., complying with any suitable standard), a wired network, etc. In some examples, communication network can be a local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, a wide area network (WAN), a public network (e.g., the Internet), a private or semi-private network, any other suitable type of network, or any suitable combination of networks.

In some examples, the GUI 100 includes a speed display 104, which may overlay the map 102. For example, the speed display 104 may show a speed at which the vehicle associated with the GUI 100 is travelling. In some examples, the GUI 100 incudes a magnification setting 106, which may overlay the map 102. In some examples, the GUI 100 may receive a selection of zooming-in or zooming-out of one or more regions of the map 102, via the magnification setting 106. Further, in some examples, the GUI 100 includes a compass 108. The compass 108 may display a direction in which the vehicle associated with the GUI 100 is travelling. Additionally and/or alternatively, in some examples, the compass 108 may orient the map 102, such as for a user who is viewing the map 102 on the GUI 100.

In some examples, the GUI 100 includes one or more indications of geofences, such as a first indication 110 and/or a second indication 112. In some examples, the first indication 110 and/or the second indication 112 are visual representations of the geofences. For example, the first indication 110 and/or the second indication 112 can include any of a variety of types of shades, colors, lines, shapes, and the like for indicating to a user where the geofences corresponding to the first indication 110 and/or the second indication 112 are located with respect to the map 102.

In some examples, the first indication 110 corresponds to a first area (e.g., municipality, city, campground, road, etc.) with a first set of regulations (e.g., LSV regulations, SPL regulations, etc.). In some examples, the second indication 112 corresponds to a second area (e.g., municipality, city, campground, road, etc.) with a second set of regulations (e.g., LSV regulations, SPL regulations, etc.). In some examples, the regulations of the first area are different than the regulations of the second area. Accordingly, mechanisms provided herein for configuring settings of a vehicle may configure the vehicle based on whether the vehicle is within a geofence corresponding to the first indication 110 and/or the second indication 112, and in some examples, further based on which geofence the vehicle is within (e.g., a first geofence associated with the first indication 110 or a second geofence associated with the second indication 112).

In some examples, different shades, colors, lines, shapes, etc. between the first indication 110 and the second indication 112 can indicate that the first area associated with the first indication 110 is more restrictive than the second area associated with the second indication 112, or vice versa. In some examples, the first indication 110 and the second indication 112 may overlap in certain location, such as because the corresponding first and second areas overlap in such location. In such overlapping instances, the area with the more restrictive regulations/ordinances may take precedence over the less restrictive regulations/ordinances, to assist a vehicle operator with staying in compliance with both areas.

In some examples, the GUI 100 includes one or more indications of areas without geofences, such as the map region 114. In some examples, the region 114 is a visual representation of an area without a geofence. For example, the region 114 may be an area of the map 102 without any displayed shades, colors, lines, shapes, or the like which are associated with visual representations of geofences. In some examples, the region 114 indicates to a vehicle operator that operation of the vehicle outside of the areas corresponding to the first and second indications 110, 112 will be unrestricted by limitations associated with the first and second indications 110, 112. Accordingly, mechanisms provided herein for configuring settings of a vehicle may do so based on whether the vehicle is not within a geofence (e.g., in an area corresponding to the region 114).

FIG. 2 illustrates an example vehicle 200, according to some aspects provided herein. The vehicle 200, which is an ORV in the illustrated example, is merely an example, but those of ordinary skill in the art will recognize other types of vehicles to which teachings of the present disclosure may be applied. For example, types of vehicles that may incorporate mechanisms to configure vehicle settings (e.g., LSV modes, low SPL modes, etc.) provided herein may include, but are not limited to: an all-terrain vehicle (ATV), a utility vehicle (UTV), an on-road vehicle, a motorcycle, a snowmobile, a moped, a pontoon boat, a jet ski, a speedboat, or another type of vehicle that may be recognized by those of ordinary skill in the art. In some examples, the vehicle 200 is an electric vehicle. In some examples, the vehicle 200 is a fuel-powered vehicle. In some examples, the vehicle 200 is a hybrid vehicle.

The vehicle 200 includes a frame 202 and one or more ground engaging members 204 (e.g., wheels and tires). The frame 202 includes a lower frame 206 and an upper frame 208. The one or more ground engaging members 204 are operably coupled to the lower frame 206. The vehicle further includes a drivetrain 210 operably coupled to the lower frame 206 and drivingly connected to one or more of the ground engaging members 204. The upper frame 208 includes a front section 212, a center section 214, and a rear section 216. The front, center, and rear sections 212, 214, 216 may couple to each other and to the lower frame 206.

In examples, the drivetrain 210 is comprised of a fuel-burning engine and transmission combination, together with a driveshaft extending between the drivetrain and two of the ground engaging members 204. As another example, the drivetrain 210 could be a hybrid, fuel cell, or electric drivetrain, among other examples. The drivetrain 210, related front and rear suspension assemblies, and steering assemblies are more thoroughly described in our application Ser. No. 17/223,717, filed April 6, 2021, Ser. No. 11/494,891 filed Jul. 28, 2006, and Ser. No. 11/494,890, filed Jul. 28, 2006, the subject matter of which is incorporated herein by reference.

The vehicle 200 further includes one or more seats 218. In some examples, the one or more seats 218 are enclosed by the frame 202. In some examples, the one or more seats 218 are a plurality of seats, such as side-by-side seats. In the illustrated example of FIG. 2, the one or more seats 218 are bucket seats.

The vehicle 200 further includes a plurality of lights, such as one or more first lights 220 and one or more second lights 222. In some examples, the one or more first lights 220 are front lights. In some examples, the one or more second lights 222 are top lights. For example, the front lights 220 can be headlights, fog lights, strobe lights, and/or other types of forward-facing lights those of ordinary skill in the art will recognize can be found on a vehicle. In some examples, the top light 222 is a work light, a strobe light, a siren and/or another type of light those of ordinary skill in the art will recognize can be found on a vehicle.

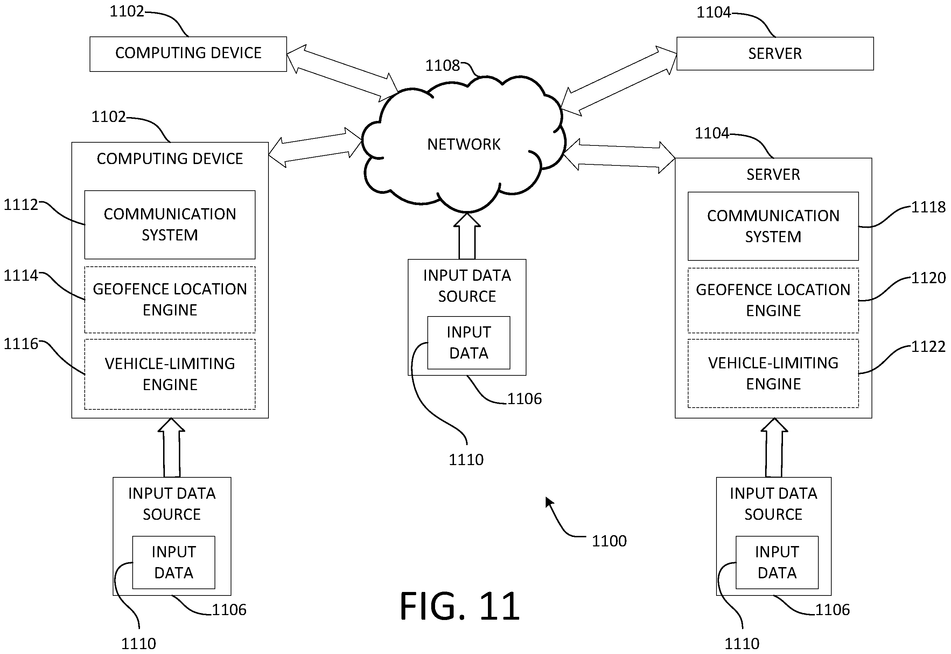

In some examples, the drivetrain 210 is in communication with a controller (e.g., similar to the computing device 1102 of FIG. 11). The controller may control the drivetrain 210, such as to control speed and/or acceleration of the vehicle 200. In some examples, the controller controls a battery and/or engine of the vehicle 200. In some examples, the vehicle 200 includes climate control settings, light/visibility settings, audio/entertainment settings, seat position settings, and/or suspension settings which are controlled by the controller and/or another computing device included in the vehicle 200. In some examples, the vehicle 200 includes an infotainment center, such as on which the user interface 100 of FIG. 1 may be displayed.

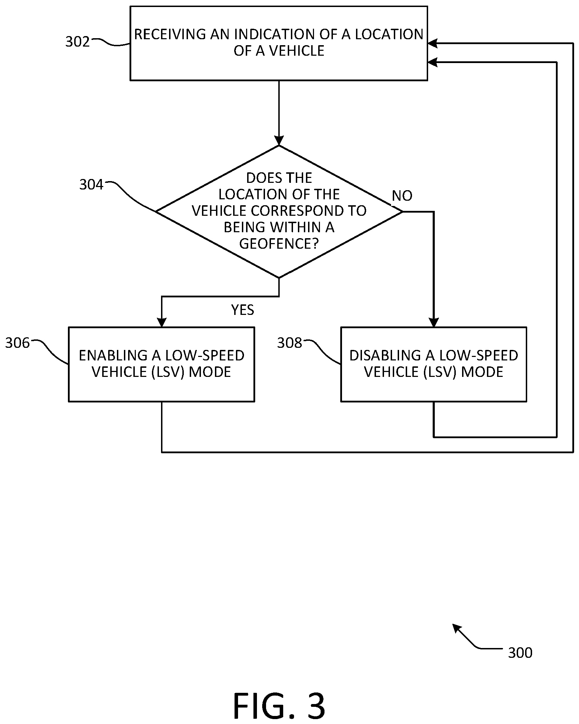

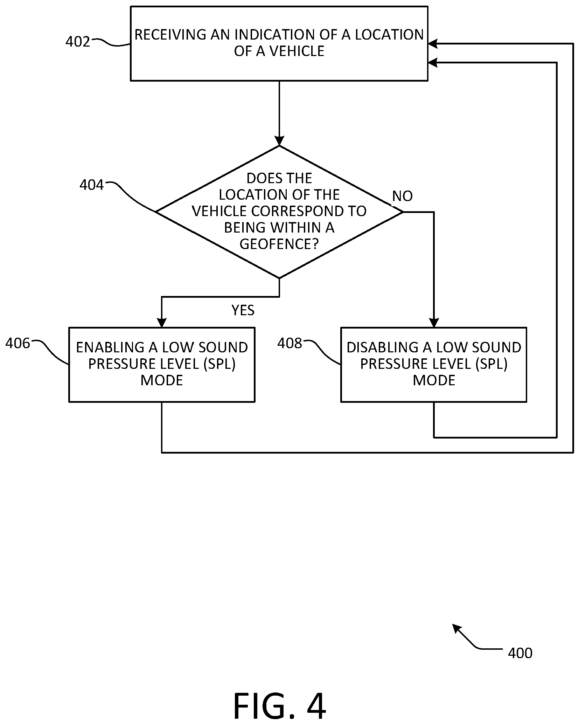

In some examples, the controller includes a processor and memory storing instructions that, when executed by the processor, cause the controller to perform a set of operations. The set of operations may include one or more aspects of methods disclosed herein, such as methods 300 and/or 400, discussed below with respect to FIGS. 3 and 4. For example, the set of operations may include receiving an indication of a location of the vehicle 200, determining whether the location of the vehicle 200 corresponds to being within a geofence, and, in response to the determination, enabling and/or disabling an LSV mode and/or low SPL mode of the vehicle 200.

Additional and/or alternative components that may be part of the vehicle 200 will be recognized by those of ordinary skill in the art, at least in light of teachings provided herein. Further, components of other types of vehicles that may incorporate mechanisms provided herein (e.g., ATVs, UTVs, on-road vehicles, off-road vehicles, motorcycles, snowmobiles, mopeds, and/or watercraft) will be recognized by those of ordinary skill in the art.

FIG. 3 illustrates an example method 300, according to some aspects described herein. The example method 300 may be a method for configuring an LSV mode and/or low power mode of a vehicle, such as an ORV. In examples, aspects of method 300 are performed by a device, such as computing device 1102 and/or server 1104, discussed below with respect to FIG. 11. Further, in some examples, aspects of the vehicle discussed with respect to method 300 may be the same or similar as aspects of the vehicle 200 discussed earlier herein with respect to FIG. 2. In some examples, method 300 may be implemented via software which is downloadable to a vehicle. In some examples, method 300 may be implemented via software which is pre-installed on a vehicle.

There is increasing pressure (e.g., from municipalities) to quiet ORVs, as may be rented within city limits. In some examples, inexperienced operators that rent vehicles may exceed posted speed limits too frequently, resulting in excessive noise and/or concerns from members of communities with the posted speed limits. These and/or other concerns may threaten the future of rental companies operating in such drive-in / drive-out urban locations and also ORV communities' reputation as being good community members and stewards of the environment.

In some examples, techniques provided herein allow vehicle systems to enter a lower speed, power, and/or engine rotations-per-minute drive mode when the vehicle enters into certain geographical regions. In some examples, these capabilities can easily be explained during the rental process to the operator and/or may be automatic, thereby reducing the burden on new vehicle operators while also cooperating with municipalities to address the above-listed concerns.

Method 300 begins at operation 302, wherein an indication is received of a location of a vehicle. In some examples, the location may be received via a location sensor of the vehicle, such as a GPS, RFID, Wi-Fi, cellular data, Bluetooth, or other location-related technology recognized by those of ordinary skill in the art. In some examples, the location sensor may be part of the vehicle. In some examples, the location sensor may be associated with the vehicle. For example, in some aspects, the location may be received via a mobile computing device associated with the vehicle, such as a cellphone, smart watch, mobile computer, or the like. In some examples, the mobile computing device may be in direct communication with the vehicle. Alternatively, in some examples, the mobile computing device may be in indirect communication with the vehicle. For example, the mobile computing device may communicate with the vehicle via an intermediary communication device, and/or the mobile computing device may communicate with a remote computing device (e.g., server 1104), without being in direct communication with the vehicle.

In some examples, the method 300 may further include determining whether one or more physical components are installed on the vehicle. For example, to comply with LSV regulations, some vehicles may be required to have particular physical components, such as lights, signage, etc. In some examples, mechanisms provided herein may detect (e.g., via user input, a sensor on the vehicle, etc.) that the physical components are installed on the vehicle.

In some examples, prior to executing the one or more of operations 302-308 of method 300, mechanisms provided herein may include authenticating whether a vehicle is authorized to operate as an LSV. For example, as a prerequisite, an operator of a vehicle may be required to verify that their vehicle is registered as an LSV before being able to execute one or more of the operations of method 300. In some examples, registration of the operator's vehicle as an LSV may be performed automatically, such as in parallel to and/or in response to, executing one or more aspects of method 300.

At operation 304, it is determined whether the location of the vehicle corresponds to being within a geofence. In some examples, geofencing is a location-based technology that creates virtual boundaries or perimeters around a specific geographic area (e.g., a municipality, a campground, a road/trail, etc.). These boundaries can be established using global positioning systems (GPS), radio-frequency identification (RFID), Wi-Fi, cellular data, Bluetooth, or other technologies which should be recognized by those of ordinary skill in the art. When a device enters or exits these predefined boundaries (e.g., the "geofences"), it can trigger indications and/or actions, such as on the device or on other device with which the device may be in communication.

Accordingly, in some examples, the determination of operation 304 includes comparing the location of the vehicle (e.g., a latitude and/or longitude position of the vehicle) to boundaries of a geofence to determine whether the location of the vehicle falls within the boundaries of the geofence. In some examples, the geofence defines a regular polygon shape (e.g., a circle, square, rectangle, etc.). In some examples, the geofence defines an irregular polygon shape (e.g., with varying angles, number of sides, and/or side measurements).

In some examples, a visual representation of the geofence is generated. For example, the visual representation may be the same or similar as aspects of the user interface 100 of FIG. 1. In some examples, the visual representations includes shapes, colors, maps, coordinates, and/or other visual features to indicate to a user the location of the geofence. In some examples, the visual representation is displayed. For example, the visual representation may be displayed via a infotainment system and/or other display of the vehicle 200. In some examples, the visual representation may be displayed via a mobile computing device, such as a portable computing device of a driver and/or passenger of the vehicle 200.

In some examples, the determination of operation 304 may be performed onboard the vehicle (e.g., via a controller or other computing device of the vehicle). In some examples, the determination of operation 304 may be performed offboard from the vehicle (e.g., via a computing device which is remote from the vehicle).

In some examples, the geofence corresponds to a municipality with one or more LSV and/or low-power regulations. For example, the LSV regulations may include a maximum allowable vehicle speed of 15 miles per hour, or 30 miles per hour, or another speed which should be recognized by those of ordinary skill in the art, such as in light of known LSV regulations. In some examples, the power regulation can be a limit on the horsepower, torque, or overall performance capabilities of an engine and/or motor of a vehicle, among other examples. Additionally, or alternatively, in some examples, the geofence corresponds to a campground, street, trail, campus, neighborhood, city, or another type of geographic area with one or more LSV and/or low-power regulations.

In some examples, the LSV and/or low-power regulations are stored in one or more databases of LSV and/or low-power regulations which are mapped to (or otherwise associated with) corresponding geofences (e.g., corresponding to a municipality or other geographical region). In some examples, LSV and/or low-power regulations can be automatically parsed from online sources (e.g., online ordinances/regulations) and be added to the database. In some examples, LSV and/or low-power regulations can be manually input into one or more of the databases of LSV and/or low-power regulations. In some examples, the databases can be updated, such as at regular intervals and/or irregular intervals (e.g., in response to the occurrence of an event). In some examples, the databases can be updated in real-time. In some examples, the databases may be updated to add regulations, update existing regulations, and/or remove outdated regulations. Compiling LSV and/or low-power regulations and mapping them to geofences associated with municipalities (or other areas) provides for the ability to help vehicle operators comply with local ordinances, thereby fostering an improved user experience for the vehicle operators.

In some examples, the determination of operation 304 may include receiving an indication corresponding to the vehicle being within a geofence. In some examples, the indication may be received based on comparing a location of the vehicle to a geofence, as discussed above. Additionally, or alternatively, in some examples, the indication may be received via user-input, such as based on a user's own knowledge of the area in which they are operating. For example, a user may recognize that they are in an area with certain restrictions (e.g., an area that does or could correspond to a geofence) and manually want to configure a mode of the vehicle, based on their recognition of the area in which they are operating. Accordingly, the user may make a selection on the vehicle, enter a code, push a button, dictate a voice command, make a gesture, or otherwise provide input indicative of an intent to configure a mode of the vehicle, based on the location of the vehicle and restrictions known to the user related to that location.

Still referring to method 300 of FIG. 3, if it is determined that the location of the vehicle corresponds to being within the geofence, then method 300 branches "YES" to operation 306, where an LSV mode and/or low-power mode of the vehicle is enabled. In some examples, when the LSV mode and/or low-power mode is/are already enabled, then the LSV mode and/or low-power mode may continue to be enabled. In some examples, when the LSV mode and/or low-power mode is/are already disabled, then the LSV mode and/or low-power mode may change states to then be enabled. In some examples, at operation 306, the LSV mode and/or low-power mode is/are automatically enabled. In some examples, operation 306 includes providing an indication to a user corresponding to enabling the LSV mode and/or low-power, such that in response to the indication, the user provides an input to enable the LSV mode and/or low-power mode. For example, the notification can be a visual and/or audio indication. In some examples, the notification is a visual indication provided via a display screen of the vehicle (e.g., an infotainment system).

In some examples, the LSV mode is configured based on one or more LSV regulations and/or low-power regulations of the area (e.g., municipality, city, road, etc.) to which the geofence corresponds. For example, in some instances, the LSV mode and/or low-power mode defines a set of vehicle restrictions that correspond to the one or more LSV regulations and/or low-power regulations of the area.

In some examples, the enabling of the LSV mode includes reducing a maximum allowable speed and/or acceleration of the vehicle based on the one or more LSV regulations. Therefore, in some examples, the set of vehicle restrictions includes a maximum allowable speed and/or acceleration of the vehicle based on the one or more LSV regulations. For example, the maximum allowable speed may be reduced by sending a signal to an engine, motor, drivetrain, controller, and/or the other vehicle component, which one of ordinary skill in the art would recognize can be responsible for controlling the speed of the vehicle. In examples, operation 306 includes providing an indication (e.g., an audio indication, a graphical indication, a haptic indication, etc.) to a vehicle operator that the vehicle has been configured according to the LSV mode.

In some examples, the enabling of the low-power mode includes reducing a maximum allowable torque and/or horsepower of a motor and/or engine. In some examples, a transmission control module of the vehicle can contain an additional variogram (e.g., in the case of a continuous variable transmission) or an additional shift schedule (e.g., in the case of a discrete ratio transmission) to target a reduction in engine rotations per minute, when the low-power mode is enabled. In some examples, with the addition of a controlled transmission, such as a steel belt continuous variable transmission and/or electronic continuous variable transmission, the low-power mode can be combined with a lower engine operating rotations per minute, to reduce noise. In some examples, the low-power mode contains an additional pedal map to limit engine power, such as based on a calibratable maximum vehicle speed associated with the low-power mode.

Alternatively, if it is determined that the location of the vehicle does not correspond to being within the geofence, then method 300 branches "NO" to operation 308, where an LSV mode and/or low-power mode of the vehicle is disabled. In some examples, when the LSV mode and/or low-power mode is/are already disabled, then the LSV mode and/or low-power mode may continue to be disabled. In some examples, when the LSV mode and/or low-power mode was previously enabled (e.g., as a result of performing aspects of operation 306 in a previous iteration of method 300), then the LSV mode and/or low-power mode may change states to then be disabled. For example, any reduction in the maximum allowable speed and/or acceleration of the vehicle, due to the LSV mode being enabled, may be eliminated. As another example, any reduction in the maximum allowable torque, horsepower, and/or rotations-per-minute of an engine and/or motor may be eliminated. These reductions may be eliminated by sending a signal to an engine, motor, drivetrain, controller, and/or the other vehicle part, which one of ordinary skill in the art would recognize can be responsible for controlling the speed and/or power of the vehicle. As another example, the LSV mode and/or low-power mode is/are disabled as a result of no longer sending a signal to implement the LSV mode and/or low-power mode, among other examples.

Method 300 may terminate at operation 306 and/or operation 308. Alternatively, method 300 may return to operation 302 to provide an iterative loop, such as of receiving an indication of a location of a vehicle, determining whether the location of the vehicle corresponds to being within a geofence, and configuring an LSV mode and/or low-power mode of the vehicle based on the determination (e.g., enabling or disabling the LSV mode and/or low-power mode).

In some examples, the received indication of operation 302 is a first indication, the location of operation 302 is a first location, and the method 300 includes receiving a second indication of a second location of the vehicle (e.g., from a second iteration of the method 300). Accordingly, method 300 may then include determining whether the second location of the vehicle corresponds to being within (or outside) of the geofence. If the second location of the vehicle corresponds to being within the geofence, then the LSV mode and/or low-power mode may be enabled. Alternatively, if the second location of the vehicle corresponds to being outside of the geofence, then the LSV mode and/or low-power mode may be disabled. Subsequent iterations of method 300 may be similarly performed based on a third indication of a third location of the vehicle, a fourth indication of a fourth location of the vehicle, and so on.

In some examples, a vehicle may be travelling between two different geofences which are each associated with different respective LSV regulations and/or low-power regulations. In such examples, in a first iteration of method 300, the geofence of operation 304 may be a first geofence, the enabling of the LSV mode and/or low-power mode of operation 306 may include enabling a first configuration of the LSV mode and/or low-power mode, and on a second iteration of method 300, the geofence of operation 304 may be a second geofence, which is different from the first geofence. Accordingly, when a second indication of a second location of the vehicle is received (e.g., on a second iteration of the method 300), operation 304 may include determining whether the second location of the vehicle corresponds to being within (or outside) of the second geofence. If the second location of the vehicle corresponds to being within the second geofence, then a second configuration of the LSV mode and/or low-power mode may be enabled, which is different from the first configuration of the LSV mode and/or low-power mode.

In some examples, the first configuration of the LSV mode and/or low-power mode corresponds to a first area (e.g., first municipality) and the second configuration of the LSV mode and/or low-power mode corresponds to a second area (e.g., second municipality). The first area may have different LSV regulations and/or low-power regulations than the second area, such that the first configuration of the LSV mode and/or low-power mode has different settings (e.g., a different maximum speed, different maximum torque, different maximum horsepower, etc.) than the second configuration of the LSV mode and/or low-power mode. Those of ordinary skill in the art should recognize that there may be any number of configurations of the LSV mode which correspond to any number of areas which may have different LSV regulations. Additionally, those of ordinary skill in the art should recognize that there may be any number of configurations of the low-power mode which correspond to any number of areas which may have different power regulations.

Generally, method 300 provides for the ability to automatically configure a vehicle according to geographic location and corresponding regulations, thereby helping vehicle operators comply with regulations/ordinances and offering an improved user experience for the vehicle operators. Additional and/or alternative advantages should be recognized by those of ordinary skill in the art.

FIG. 4 illustrate an example method 400, according to some aspects described herein. The example method 400 may be a method for configuring a low SPL mode of a vehicle, such as an ORV. In examples, aspects of method 400 are performed by a device, such as computing device 1102 and/or server 1104, discussed below with respect to FIG. 11. Further, in some examples, aspects of the vehicle discussed with respect to method 400 may be the same or similar as aspects of the vehicle 200 discussed earlier herein with respect to FIG. 2. In some examples, method 400 may be implemented via software which is downloadable to a vehicle. In some examples, method 400 may be implemented via software which is pre-installed on a vehicle.

Method 400 begins at operation 402, wherein an indication is received of a location of a vehicle. In some examples, the location may be received via a location sensor of the vehicle, such as a GPS, RFID, Wi-Fi, cellular data, Bluetooth, or other location-related technology recognized by those of ordinary skill in the art. In some examples, the location sensor may be part of the vehicle. In some examples, the location sensor may be associated with the vehicle. For example, in some aspects, the location may be received via a mobile computing device associated with the vehicle, such as a cellphone, smart watch, mobile computer, or the like. In some examples, the mobile computing device may be in direct communication with the vehicle. Alternatively, in some examples, the mobile computing device may be in indirect communication with the vehicle. For example, the mobile computing device may communicate with the vehicle via an intermediary communication device, and/or the mobile computing device may communicate with a remote computing device (e.g., server 1104), without being in direct communication with the vehicle.

At operation 404, it is determined whether the location of the vehicle corresponds to being within a geofence. In some examples, geofencing is a location-based technology that creates virtual boundaries or perimeters around a specific geographic area (e.g., a municipality, a campground, a road/trail, etc.). These boundaries can be established using global positioning systems (GPS), radio-frequency identification (RFID), Wi-Fi, cellular data, Bluetooth, or other technologies which should be recognized by those of ordinary skill in the art. When a device enters or exits these predefined boundaries (e.g., the "geofences"), it can trigger indications and/or actions, such as on the device or on other device with which the device may be in communication.

Accordingly, in some examples, the determination of operation 404 includes comparing the location of the vehicle (e.g., a latitude and/or longitude position of the vehicle) to boundaries of a geofence to determine whether the location of the vehicle falls within the boundaries of the geofence. In some examples, the geofence defines a regular polygon shape (e.g., a circle, square, rectangle, etc.). In some examples, the geofence defines an irregular polygon shape (e.g., with varying angles, number of sides, and/or side measurements).

In some examples, a visual representation of the geofence is generated. For example, the visual representation may be the same or similar as aspects of the user interface 100 of FIG. 1. In some examples, the visual representations includes shapes, colors, maps, coordinates, and/or other visual features to indicate to a user the location of the geofence. In some examples, the visual representation is displayed. For example, the visual representation may be displayed via a infotainment system and/or other display of the vehicle 200. In some examples, the visual representation may be displayed via a mobile computing device, such as a portable computing device of a driver and/or passenger of the vehicle 200.

In some examples, the determination of operation 404 may be performed onboard the vehicle (e.g., via a controller or other computing device of the vehicle). In some examples, the determination of operation 404 may be performed offboard from the vehicle (e.g., via a computing device which is remote from the vehicle).

In some examples, the geofence corresponds to a municipality with one or more SPL regulations. Additionally, or alternatively, in some examples, the geofence corresponds to a campground, street, trail, campus, neighborhood, city, or another type of geographic area with one or more SPL regulations. In some examples, the SPL regulations are stored in one or more databases of SPL regulations which are mapped to (or otherwise associated with) corresponding geofences (e.g., corresponding to a municipality or other geographical region). In some examples, SPL regulations can be automatically parsed from online sources (e.g., online ordinances/regulations) and be added to the database. In some examples, SPL regulations can be manually input into one or more of the databases of SPL regulations. In some examples, the databases can be updated, such as at regular intervals and/or irregular intervals (e.g., in response to the occurrence of an event). In some examples, the databases can be updated in real-time. In some examples, the databases may be updated to add regulations, update existing regulations, and/or remove outdated regulations. Compiling SPL regulations and mapping them to geofences associated with municipalities (or other areas) provides for the ability to help vehicle operators comply with local ordinances, thereby fostering an improved user experience for the vehicle operators.

In some examples, the determination of operation 404 may include receiving an indication corresponding to the vehicle being within a geofence. In some examples, the indication may be received based on a geofence, as discussed above. Additionally, or alternatively, in some examples, the indication may be received via user-input, such as based on a user's own knowledge of the area in which they are operating. For example, a user may recognize that they are in an area with certain restrictions (e.g., an area that does or could correspond to a geofence) and manually want to configure a mode of the vehicle, based on their recognition of the area in which they are operating. Accordingly, the user may make a selection on the vehicle, enter a code, push a button, dictate a voice command, make a gesture, or otherwise provide input indicative of an intent to configure a mode of the vehicle, based on the location of the vehicle and restrictions known to the user related to that location.

Still referring to method 400 of FIG. 4, if it is determined that the location of the vehicle corresponds to being within the geofence, then method 400 branches "YES" to operation 406, where a low SPL mode of the vehicle is enabled. In some examples, when the low SPL mode is already enabled, then the low SPL mode may continue to be enabled. In some examples, when the low SPL mode is already disabled, then the low SPL mode may change states to then be enabled. In some examples, at operation 406, the low SPL mode is automatically enabled. In some examples, operation 406 includes providing an indication to a user corresponding to enabling the low SPL mode, such that in response to the indication, the user provides an input to enable the low SPL mode.

In some examples, the low SPL mode is configured based on one or more SPL regulations of the area (e.g., municipality, city, road, etc.) to which the geofence corresponds. In some examples, the enabling of the low SPL mode includes reducing rotations per minute (RPM) of an engine of the vehicle. For example, the RPM of the engine may be reduced by sending a signal to the engine, updating a setting in the controller, and/or signaling another vehicle component, which one of ordinary skill in the art would recognize can be responsible for controlling the RPM of the engine. In some examples, the enabling of the low SPL mode includes adjusting a tire pressure of a vehicle, a profile of a vehicle, and/or an interface to a road on which the vehicle is travelling. For example, signals may be sent from a controller to one or more of the aforementioned components (or intermediary components) to adapt the aforementioned components based on the enabling of the low SPL mode. In examples, operation 406 includes providing an indication (e.g., an audio indication, a graphical indication, a haptic indication, etc.) to a vehicle operator that the vehicle has been configured according to the low SPL mode.

In some examples, a calibration is performed to determine what RPM of an engine of a given vehicle corresponds to what SPL. Accordingly, the RPM reduction may be based on the SPL regulations of an area (e.g., municipality, city, road, etc.), as well as based on the calibration for the given vehicle, such that the given vehicle complies with the SPL regulation of the area. For example, if a municipality has a SPL regulation of a dBA threshold (e.g., 92 dBA), then a calibration may include determining what RPM is needed for a specific dBA level below the dBA threshold (e.g., 91 dBA, which is 1 dBA less than the 92 dBA threshold, for a margin of error). Accordingly, when a vehicle enters the municipality, the vehicle may be adapted to have a noise output below the dBA threshold, based on the calibration. It will be appreciated that other margins of error are contemplated. In some examples, clutching, engine tuning, and/or other modifications to an engine could support a reduction of the engine's RPM.

In some examples, the enabling of the low SPL mode includes actuating baffles or other noise-reduction parts in an exhaust of the vehicle, thereby muffling noise from the exhaust via the baffles or other noise-reduction parts. In some examples, exhaust from the vehicle may be redirected, such as redirected at a ground on which the vehicle is travelling, to reduce SPL. The redirection may be due to baffles, rotation/actuation of an exhaust, or any other technique which may be recognized by those of ordinary skill in the art for redirecting exhaust. In some examples, an existing vehicle may be retrofitted with an active exhaust system, such as a system that includes actuating baffles and/or other noise-reduction parts. Therefore, an existing vehicle can be retrofitted to allow for the implementation of one or more aspects of method 400. One of ordinary skill in the art may recognize that there are other noise-generating components of a vehicle (e.g., other than engines or exhausts), for which noise can be reduced using mechanisms provided herein.

Alternatively to the "YES" branch, if it is determined that the location of the vehicle does not correspond to being within the geofence, then method 400 branches "NO" to operation 408, where a low SPL mode of the vehicle is disabled. In some examples, when the low SPL mode is already disabled, then the low SPL mode may continue to be disabled. In some examples, when the low SPL mode was previously enabled (e.g., as a result of performing aspects of operation 406 in a previous iteration of method 400), then the low SPL mode may change states to then be disabled. For example, any reduction in the RPM of the vehicle's engine, due to the low-SPL mode being enabled, may be eliminated. The reduction may be eliminated by sending a signal to the engine, updating a setting in the controller, and/or otherwise signaling a vehicle part, which one of ordinary skill in the art would recognize can be responsible for controlling the RPM of the vehicle's engine. Further, in some examples, any baffles or other noise-reduction parts, which were actuated to muffle noise may be un-actuated (e.g., reset to an initial state in which the part was prior to actuation). As another example, the low SPL mode is disabled as a result of no longer sending a signal to implement the low SPL mode, among other examples.

Method 400 may terminate at operation 406 and/or operation 408. Alternatively, method 400 may return to operation 402 to provide an iterative loop, such as of receiving an indication of a location of a vehicle, determining whether the location of the vehicle corresponds to being within a geofence, and configuring a low SPL mode of the vehicle based on the determination (e.g., enabling or disabling the low SPL mode).

Generally, method 400 provides for the ability to automatically configure a vehicle according to geographic location and corresponding regulations, thereby helping vehicle operators comply with regulations/ordinances and offering an improved user experience for the vehicle operators. Additional and/or alternative advantages should be recognized by those of ordinary skill in the art.

In some examples, aspects discussed herein for enabling/disabling a low SPL mode (as described with respect to method 400) could similarly apply to lighting restrictions. For example, some geographic areas (e.g., a country, a municipality, a campground, a road/trail, etc.) have certain lighting regulations. For example, a first area may allow for high beam and fog/peripheral lights to be on at the same time, while a second area may not allow for high beam and fog/peripheral lights to be on at the same. Accordingly, the same or similar geofences as discussed earlier herein with respect to FIGS. 1, 3, and/or 4 could correspond to geographic areas with one or more lighting regulations. If it is determined that the location of a vehicle corresponds to being within a geofence corresponding to not allowing high beam and peripheral lights to be on at the same time, then a restricted lighting mode of the vehicle may be enabled in which high beam and peripheral lights of the vehicle are not on at the same time. For example, signals may be sent from a controller to the high beam and/or peripheral lights to turn off certain lights that are not allowed to be on, based on regulations corresponding to the geographic area. Alternatively, if it is determined that the location of the vehicle does not correspond to being within a geofence corresponding to not allowing high beam and peripheral lights to be on at the same time, then the restricted lighting mode may be disabled. Conversely, in some examples, a geofence may correspond to allowing high beam and peripheral lights to be on at the same time, such that the restricted lighting mode is disabled, when it is determined that the location of the vehicle corresponds to being within the geofence.

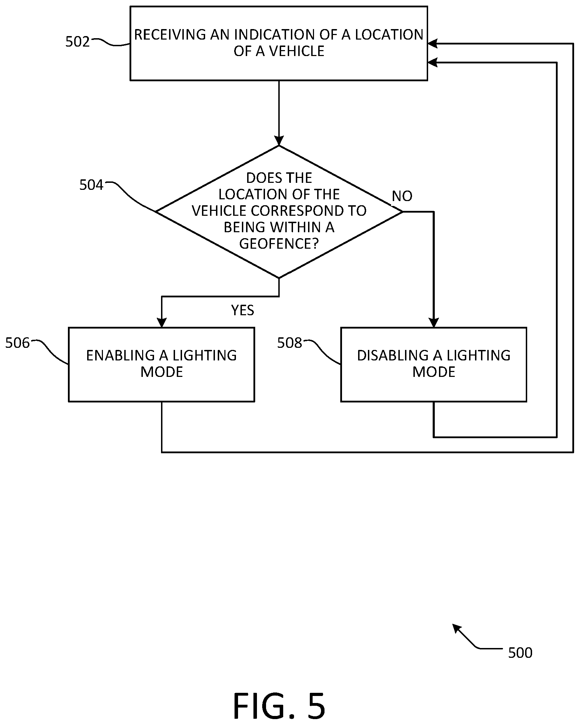

FIG. 5 illustrate an example method 500, according to some aspects described herein. The example method 500 may be a method for configuring a lighting mode of a vehicle, such as an ORV. In examples, aspects of method 500 are performed by a device, such as computing device 1102 and/or server 1104, discussed below with respect to FIG. 11. Further, in some examples, aspects of the vehicle discussed with respect to method 500 may be the same or similar as aspects of the vehicle 200 (e.g., including lights 220, 222) discussed earlier herein with respect to FIG. 2. In some examples, method 500 may be implemented via software that is downloadable to a vehicle. In some examples, method 500 may be implemented via software that is pre-installed on a vehicle.

Method 500 begins at operation 502, wherein an indication is received of a location of a vehicle. In some examples, the location may be received via a location sensor of the vehicle, such as a GPS, RFID, Wi-Fi, cellular data, Bluetooth, or other location-related technology recognized by those of ordinary skill in the art. In some examples, the location sensor may be part of the vehicle. In some examples, the location sensor may be associated with the vehicle. For example, in some aspects, the location may be received via a mobile computing device associated with the vehicle, such as a cellphone, smart watch, mobile computer, or the like. In some examples, the mobile computing device may be in direct communication with the vehicle. Alternatively, or additionally, in some examples, the mobile computing device may be in indirect communication with the vehicle. For example, the mobile computing device may communicate with the vehicle via an intermediary communication device, and/or the mobile computing device may communicate with a remote computing device (e.g., server 504), without being in direct communication with the vehicle.

At operation 504, it is determined whether the location of the vehicle corresponds to being within a geofence. In some examples, geofencing is a location-based technology that creates virtual boundaries or perimeters around a specific geographic area (e.g., a municipality, a campground, a road/trail, work area, personal property, etc.). These boundaries can be established using global positioning systems (GPS), radio-frequency identification (RFID), Wi-Fi, cellular data, Bluetooth, or other technologies which should be recognized by those of ordinary skill in the art. When a device enters or exits these predefined boundaries (e.g., the "geofences"), it can trigger indications and/or actions, such as on the device or on other device with which the device may be in communication.

Accordingly, in some examples, the determination of operation 504 includes comparing the location of the vehicle (e.g., a latitude and/or longitude position of the vehicle) to boundaries of a geofence to determine whether the location of the vehicle falls within the boundaries of the geofence. In some examples, the geofence defines a regular polygon shape (e.g., a circle, square, rectangle, etc.). In some examples, the geofence defines an irregular polygon shape (e.g., with varying angles, number of sides, and/or side measurements).

In some examples, a visual representation of the geofence is generated. For example, the visual representation may be the same or similar as aspects of the user interface 100 of FIG. 1. In some examples, the visual representations includes shapes, colors, maps, coordinates, and/or other visual features to indicate to a user the location of the geofence. In some examples, the visual representation is displayed. For example, the visual representation may be displayed via a infotainment system and/or other display of the vehicle 200. In some examples, the visual representation may be displayed via a mobile computing device, such as a portable computing device of a driver and/or passenger of the vehicle 200.

In some examples, the determination of operation 504 may be performed onboard the vehicle (e.g., via a controller or other computing device of the vehicle). In some examples, the determination of operation 504 may be performed offboard from the vehicle (e.g., via a computing device which is remote from the vehicle).

In some examples, the geofence corresponds to a work zone. In some examples, the geofence corresponds to an approved area for a vehicle being operated by a youth driver. Additionally, or alternatively, in some examples, the geofence corresponds to a campground, street, trail, campus, neighborhood, city, or another type of geographic area. In some examples, lighting settings within, outside, and/or when crossing the geofences are stored in one or more databases of lighting settings which are mapped to (or otherwise associated with) corresponding geofences (e.g., corresponding to a work zone, youth vehicle area, or other geographical region). In some examples, lighting settings regulations can be automatically compiled and added to the database. In some examples, lighting settings can be manually input into one or more of the databases of lighting settings.

In some examples, a database can be updated, such as at regular intervals and/or irregular intervals (e.g., in response to the occurrence of an event). In some examples, a database can be updated in real-time. In some examples, a database may be updated to add lighting settings, update existing lighting settings, and/or remove outdated lighting settings. In examples, compiling lighting settings and mapping them to geofences associated with certain areas provides for the ability to help vehicle operators comply with local ordinances. In examples, compiling lighting settings and mapping them to geofences associated with certain areas provides for the ability to help vehicle operators comply with parental lighting preferences. In examples, compiling lighting settings and mapping them to geofences associated with certain areas provides for the ability to help vehicle operators comply with commercial work preferences. Overall, each of these improved abilities foster an improved user experience for the vehicle operators and/or owners.

In some examples, the determination of operation 504 may include receiving an indication corresponding to the vehicle being within a geofence, outside a geofence, and/or at a geofence (e.g., when a vehicle is crossing the geofence). In some examples, the indication may be received based on a geofence, as discussed above.

Still referring to method 500 of FIG. 5, if it is determined that the location of the vehicle corresponds to being within, outside of, and/or at the geofence, then method 500 branches "YES" to operation 506, where a lighting mode of the vehicle is enabled. In some examples, when the lighting mode is already enabled, then the lighting mode may continue to be enabled. In some examples, when the lighting mode is already disabled, then the lighting mode may change states to then be enabled. In some examples, at operation 506, the lighting mode is automatically enabled. In some examples, operation 506 includes providing an indication to a user corresponding to enabling the lighting mode, such that in response to the indication, the user provides an input to enable the lighting mode. For instance, an alert may be presented that includes a user interface element actuatable by the user to enable the lighting mode. As another example, the alert comprises an instruction to the user to actuate another vehicle control to enable the lighting mode accordingly.

In some examples, the lighting mode is configured based on one or more lighting settings of the area (e.g., a work zone, a youth vehicle area, a trail, etc.) to which the geofence corresponds. In some examples, such as in a youth driver context, the lighting mode includes flashing lights of the vehicle (e.g., once, twice, continuously, etc.) to draw attention to the vehicle as it leaves and/or enters the geofenced area, such as to alert the operator of the vehicle and/or others that the vehicle is entering and/or leaving the geofenced area. In some examples, such as in a commercial context, the lighting mode includes turning on a strobe light of the vehicle as the vehicle enters into a work site, such as so that the operator of the vehicle does not have to remember to turn on the strobe light. In some examples, enabling the lighting mode includes turning on one or more lights, turning off one or more lights, and/or flashing one or more lights. For example, the lights may be controlled by sending a signal to the lights, updating a setting the controller, and/or signaling another vehicle component, which one of ordinary skill in the art would recognize can be responsible for controlling one or more lights of the vehicle. In examples, operation 506 includes providing an indication (e.g., an audio indication, a graphical indication, a haptic indication, etc.) to a vehicle operator that the vehicle has been configured according to the lighting mode.

Alternatively to the "YES" branch, if it is determined that the location of the vehicle does not correspond to being within, outside of, and/or at the geofence, then method 500 branches "NO" to operation 508, where a lighting mode of the vehicle is disabled. In some examples, when the lighting mode is already disabled, then the lighting mode may continue to be disabled. In some examples, when the lighting mode was previously enabled (e.g., as a result of performing aspects of operation 506 in a previous iteration of method 500), then the lighting mode may change states to then be disabled. For example, any lights being turned to an on setting or a flash setting, due to the lighting mode being enabled, may be turned off. The lighting mode may be disabled by sending a signal to one or more lights, updating a setting in the controller, and/or otherwise signaling a vehicle part, which one of ordinary skill in the art would recognize can be responsible for controlling one or more lights of the vehicle. As another example, the lighting mode is disabled as a result of no longer sending a signal to implement the lighting mode, among other examples. Similar to operation 506, operation 508 may comprise presenting an alert that includes a user interface element actuatable by the user to disable the lighting mode. As another example, the alert comprises an instruction to the user to actuate another vehicle control to disable the lighting mode accordingly.

Method 500 may terminate at operation 506 and/or operation 508. Alternatively, method 500 may return to operation 502 to provide an iterative loop, such as of receiving an indication of a location of a vehicle, determining whether the location of the vehicle corresponds to being within, outside of, and/or crossing a geofence, and configuring a lighting mode of the vehicle based on the determination (e.g., enabling or disabling the lighting mode).

Generally, method 500 provides for the ability to automatically configure a vehicle according to geographic location and corresponding lighting preferences, thereby helping vehicle operators comply with lighting preferences of vehicle owners, landowners, regulators, etc. and offering an improved user experience for the vehicle operators. Additional and/or alternative advantages should be recognized by those of ordinary skill in the art.

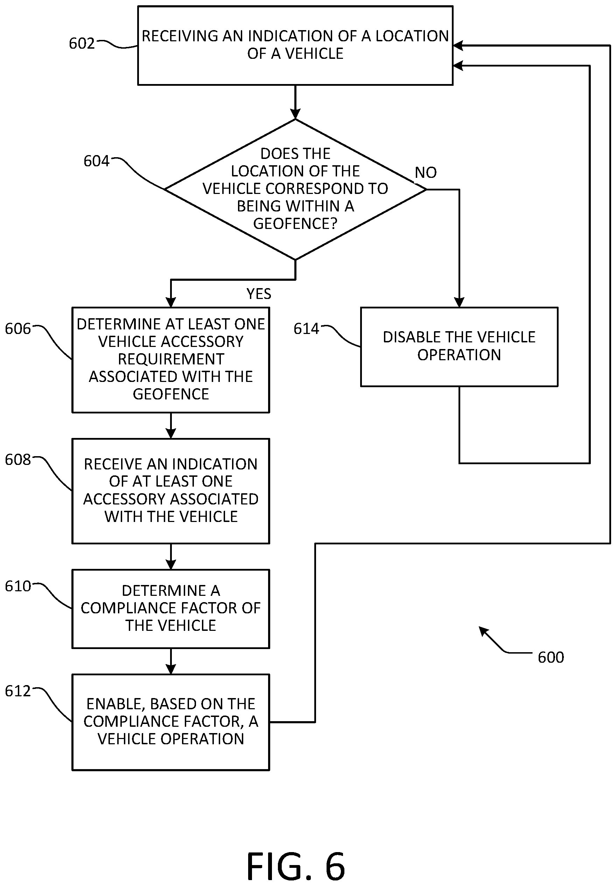

FIG. 6 illustrates an example method 600, according to some aspects described herein. The example method 600 may be a method for configuring an operation of a vehicle, such as an ORV, based on a location of the vehicle. In examples, aspects of method 600 are performed by a device, such as computing device 1102 and/or server 1104, discussed below with respect to FIG. 11. Further, in some examples, aspects of the vehicle discussed with respect to method 600 may be the same or similar as aspects of the vehicle 200 discussed earlier herein with respect to FIG. 2. In some examples, method 600 may be implemented via software that is downloadable to a vehicle. In some examples, method 600 may be implemented via software that is pre-installed on a vehicle.

Local rules and/or regulations for vehicles operations (such as ORVs) vary by location. For example, tail whips having specific height and visibility features are required in certain sand dune areas, select trails may require self-recovery devices, and/or certain municipalities may have lighting requirements. Additional and/or alternative examples of vehicle accessory requirements for particular geographic locations should be recognized by those of ordinary skill in the art.

Techniques provided herein provide the ability to (1) detect what accessories are coupled to the vehicle, (2) determine local rules and regulation based on a location of the vehicle, and/or (3) determine whether the vehicle and its accessories are in compliance with the local rules and regulations. In some examples, a compliance factor may be used for certain accessories. For example, if a vehicle has no tail whip, then the vehicle may be non-compliant (e.g., compliance factor of zero). As another example, if a vehicle has a tail whip meeting a minimum height requirement, then the vehicle may be minimally compliant (e.g., a compliance factor of one). As another example, if a vehicle has a tail whip exceeding minimum height requirements with a flag and lighted staff, the vehicle may be considered optimally compliant (e.g., a compliance factor of two). It will be appreciated that the disclosed compliance factors are provided as examples and, in other examples, a different scale may be used to indicate compliance (e.g., one to ten, "A" through "F", etc.).

Example accessories which may be coupled to a vehicle include rock lights, light emitting diode (LED) whips (e.g., tail whips), work lights, rear lights, head/tail lights, turn signal lights, sprayers, salt spreaders, plows, power seats, power windows, puddle lights, a gate opener, a garage door opener, a tool tracker, a trail camera, a cattle waterer, a rain gauge, a seat heater, a wind speed sensor, a windshield wiper, an HVAC controller, an irrigation well monitor, and/or a long range voice (e.g., radio). Additional and/or alternative types of vehicle accessories may be recognized by those of ordinary skill in the art. In some examples, the vehicle accessories includes smart vehicle accessories, such as because the vehicle accessory has its own processor and/or memory (e.g., separate from a processor and/or memory of the vehicle).

In some examples, the system may be configured to output an indication to the operator the compliance factor. In some examples, the indication includes a visual and/or audio indication. In some examples, when the vehicle and accessories are not in compliance, the system may output options for the operator to purchase or otherwise procure a required accessory. For example, the system may output an indication of a dealership and/or outfitter that carries the accessory, such that the operator can obtain the required accessory.

In some examples, the system may control the operation of the vehicle based on the compliance factor. For example, the system may limit a vehicle top speed or control a drive mode of the vehicle. Additionally, or alternatively, the system may output to the operator an indication of non-compliance if, for example, rules/regulation change during a ride. For example, certain vehicles may not comply with rules/regulations when entering a second, different trail system from a first trail system.

Method 600 begins at operation 602, wherein an indication is received of a location of a vehicle. In some examples, the location may be received via a location sensor of the vehicle, such as a GPS, RFID, Wi-Fi, cellular data, Bluetooth, or other location-related technology recognized by those of ordinary skill in the art. In some examples, the location sensor may be part of the vehicle. In some examples, the location sensor may be associated with the vehicle. For example, in some aspects, the location may be received via a mobile computing device associated with the vehicle, such as a cellphone, smart watch, mobile computer, or the like. In some examples, the mobile computing device may be in direct communication with the vehicle. Alternatively, or additionally, in some examples, the mobile computing device may be in indirect communication with the vehicle. For example, the mobile computing device may communicate with the vehicle via an intermediary communication device, and/or the mobile computing device may communicate with a remote computing device (e.g., server 1104), without being in direct communication with the vehicle.

At operation 604, it is determined whether the location of the vehicle corresponds to being within a geofence. In some examples, geofencing is a location-based technology that creates virtual boundaries or perimeters around a specific geographic area (e.g., a municipality, a campground, a road/trail, etc.). These boundaries can be established using global positioning systems (GPS), radio-frequency identification (RFID), Wi-Fi, cellular data, Bluetooth, or other technologies which should be recognized by those of ordinary skill in the art. When a device enters or exits these predefined boundaries (e.g., the "geofences"), it can trigger indications and/or actions, such as on the device or on other device with which the device may be in communication.

Accordingly, in some examples, the determination of operation 604 includes comparing the location of the vehicle (e.g., a latitude and/or longitude position of the vehicle) to boundaries of a geofence to determine whether the location of the vehicle falls within the boundaries of the geofence. In some examples, the geofence defines a regular polygon shape (e.g., a circle, square, rectangle, etc.). In some examples, the geofence defines an irregular polygon shape (e.g., with varying angles, number of sides, and/or side measurements).

In some examples, a visual representation of the geofence is generated. For example, the visual representation may be the same or similar as aspects of the user interface 100 of FIG. 1. In some examples, the visual representations includes shapes, colors, maps, coordinates, and/or other visual features to indicate to a user the location of the geofence. In some examples, the visual representation is displayed. For example, the visual representation may be displayed via a infotainment system and/or other display of the vehicle 200. In some examples, the visual representation may be displayed via a mobile computing device, such as a portable computing device of a driver and/or passenger of the vehicle 200.

In some examples, the determination of operation 604 may be performed onboard the vehicle (e.g., via a controller or other computing device of the vehicle). In some examples, the determination of operation 604 may be performed offboard from the vehicle (e.g., via a computing device which is remote from the vehicle).

In some examples, the geofence corresponds to a geographic region with one or more rules and/or regulations for vehicle operations. For example, the geofence can correspond to a private property, campground, street, trail, campus, neighborhood, city, and/or another type of geographic area with associated rules and/or regulations for vehicles. For example, LSV rule and regulations and power rules and regulations, are discussed earlier herein with respect to method 300 of FIG. 3. As another example, SPL rules and regulations are discussed earlier herein with respect to method 400 of FIG. 4. As yet another example, lighting rules and regulations are discussed earlier herein with respect to method 500 of FIG. 5. In addition and/or alternatively to the rules and regulations of FIGS. 3-5, the geofences discussed with respect to method 600 can include rules and/or regulations for one or more of a plurality of vehicle accessories, such as lights, sprayers, salt spreaders, plows, power seats, power windows, openers, tool trackers, trail cameras, waterers, gauges, heaters, meteorological sensors, windshield wipers, seatbelts, wheels, and/or a long range voice (e.g., radio). Additional and/or alternative types of vehicle accessories for which geographic regions may have associated rules and/or regulations may be recognized by those of ordinary skill in the art.

In some examples, the rules and/or regulations are stored in one or more databases of rules and/or regulations which are mapped to (or otherwise associated with) corresponding geofences. In some examples, the rules and/or regulations are stored in a look-up table. In some examples, rules and/or regulations can be automatically parsed from online sources (e.g., online ordinances/regulations) and be added to the database and/or look-up table. In some examples, rules and/or regulations can be manually input into one or more of the databases of rules and/or regulations. In some examples, a database can be updated, such as at regular intervals and/or irregular intervals (e.g., in response to the occurrence of an event). In some examples, database can be updated in real-time. In some examples, a database may be updated to add rules and/or regulations, update existing rules and/or regulations, and/or remove outdated rules and/or regulations. Compiling rules and regulations and mapping them to geofences associated with geographic areas provides for the ability to help vehicle operators comply with local rules for vehicles, thereby fostering an improved user experience for the vehicle operators.

In some examples, the determination of operation 604 may include receiving an indication corresponding to the vehicle being within a geofence. In some examples, the indication may be received based on comparing a location of the vehicle to a geofence, as discussed above.

Still referring to method 600 of FIG. 6, if it is determined that the location of the vehicle corresponds to being within the geofence, then method 600 branches "YES" to operation 606, where at least one vehicle accessory requirement associated with the geofence is determined. For example, the vehicle accessory requirement can be obtained or otherwise received from the database of rules and/or regulations associated with the geofence. In some examples, the vehicle accessory requirement can be associated with one or more types of vehicle requirements described herein. For example, the vehicle accessory requirement can be a light requirement, a tail whip requirement, a plow requirement, a radio requirement, and/or a requirement for another type of vehicle accessory provided herein.

At operation 608, an indication of at least one accessory associated with the vehicle is received. In some examples, operation 608 can include determining what accessories are associated with the vehicle. In some examples, determining that an accessory is associated with the vehicle includes determining the accessory is coupled (e.g., directly and/or indirectly) to the vehicle. In some examples, the accessories associated with the vehicle can be automatically detected and/or identified. In some examples, a user can provide an indication to the vehicle of one or more accessories being coupled to the vehicle, such as including an identifier of what are the one or more accessories.

At operation 610, based on the at least one vehicle accessory requirement (from operation 606) and the indication of at least one accessory (from operation 608), a compliance factor of the vehicle is determined. In some examples, the compliance factor is a degree to which the vehicle complies with one or more rules/regulations of the geofence within which the vehicle is located. In some examples, the compliance factor is binary, such as when a vehicle is either in compliance with the rules and/or regulations or not in compliance with the rules and/or regulations. In some examples, the compliance factor is granular, such as when a vehicle can be non-compliant, minimally compliant, or more than minimally compliant. In some examples, a vehicle can be in compliance with some rules and/or regulations, but not other rules and/or regulations, which can weight a value of the compliance factor.

At operation 612, an operation of the vehicle is controlled based on the compliance factor. For example, the vehicle operation can include enabling a vehicle mode, setting a maximum speed, setting a maximum power, turning on one or more lights, automatically adjusting an orientation of an attachment (e.g., height, distance, rotation), enabling an indicator (e.g., via a display of the vehicle), and/or another vehicle operation that may be recognized by those of ordinary skill in the art. For example, if a vehicle has mudding wheels, which may be relatively large/unstable as compared to stock wheels, then the vehicle operation can include limiting a speed (e.g., RPM) of the vehicle, unless the mudding wheels are switched to stock wheels. As another example, if the vehicle is in a geofenced location and has an accessory coupled to it that is not compliant (e.g., a plow, a stereo, etc.), then an indication can be generated and provided to the vehicle operator (e.g., via a display of the vehicle) notifying the vehicle operator that the accessory is non-compliant and should be de-coupled.

In some examples, when a vehicle operation is already enabled, then the vehicle operation may continue to be enabled. In some examples, when the vehicle operation is already disabled, then the vehicle operation may change states to then be enabled. In some examples, at operation 612, the vehicle operation is/are automatically enabled. In some examples, operation 612 includes providing an indication to a user corresponding to the vehicle operation, such that in response to the indication, the user provides an input to adapt one or more attachments of the vehicle. For example, the notification can be a visual and/or audio indication. In some examples, the notification is a visual indication provided via a display screen of the vehicle (e.g., an infotainment system).

In some examples, the vehicle operation is configured based on one or more rules and/or regulations of the area (e.g., municipality, city, road, etc.) to which the geofence corresponds. For example, in some instances, the vehicle operation includes a set of vehicle restrictions that satisfies the one or more rules and/or regulations of the area.

Alternatively, if it is determined that the location of the vehicle does not correspond to being within the geofence, then method 600 branches "NO" to operation 614, where a vehicle operation is disabled and/or not performed. In some examples, when the vehicle operation is already disabled or not being performed, then the vehicle operation may continue to be disabled or not performed. In some examples, when the vehicle operation was previously enabled or being performed (e.g., as a result of performing aspects of operation 612 in a previous iteration of method 600), then the vehicle operation may change states to then be disabled or not performed. For example, any reduction in the maximum allowable speed and/or acceleration of the vehicle, may be eliminated. As another example, any lights that were turned on may be turned off. As yet another example, an indication notifying a user that a tail whip is required on the vehicle within the geofenced area may be turned off when the vehicle is no longer in the geofenced area. Additional and/or alternative examples should be recognized by those of ordinary skill in the art.

Method 600 may terminate at operation 612 and/or operation 614. Alternatively, method 600 may return to operation 602 to provide an iterative loop, such as of receiving an indication of a location of a vehicle, determining whether the location of the vehicle corresponds to being within a geofence, and configuring a vehicle operation based on the determination.

In some examples, the received indication of operation 602 is a first indication, the location of operation 602 is a first location, and the method 600 includes receiving a second indication of a second location of the vehicle (e.g., from a second iteration of the method 600). Accordingly, method 600 may then include determining whether the second location of the vehicle corresponds to being within (or outside) of the geofence. If the second location of the vehicle corresponds to being within the geofence, then the vehicle operation may be enabled

(e.g., performed). Alternatively, if the second location of the vehicle corresponds to being outside of the geofence, then the vehicle operation may be disabled (e.g., not performed). Subsequent iterations of method 600 may be similarly performed based on a third indication of a third location of the vehicle, a fourth indication of a fourth location of the vehicle, and so on.

In some examples, a vehicle may be travelling between two different geofences which are each associated with different respective rules and/or regulations. In such examples, in a first iteration of method 600, the geofence of operation 604 may be a first geofence, the enabling of the vehicle operation of operation 612 may include enabling a first vehicle operation, and on a second iteration of method 600, the geofence of operation 604 may be a second geofence, which is different from the first geofence. Accordingly, when a second indication of a second location of the vehicle is received (e.g., on a second iteration of the method 600), operation 604 may include determining whether the second location of the vehicle corresponds to being within (or outside) of the second geofence. If the second location of the vehicle corresponds to being within the second geofence, then a second vehicle operation may be enabled, which is different from the first vehicle operation.

In some examples, the first vehicle operation corresponds to a first area (e.g., first municipality) and the second vehicle operation corresponds to a second area (e.g., second municipality). The first area may have different rules and/or regulations than the second area, such that the first vehicle operation has different settings (e.g., different vehicle accessory requirements, different compliance factors, different operations, etc.) than the second vehicle operation. Those of ordinary skill in the art should recognize that there may be any number of vehicle operations which correspond to any number of areas which may have different rules and/or regulations.

Generally, method 600 provides for the ability to configure attachments of a vehicle according to geographic location and corresponding regulations, thereby helping vehicle operators comply with rules/regulations and offering an improved user experience for the vehicle operators. Additional and/or alternative advantages should be recognized by those of ordinary skill in the art.

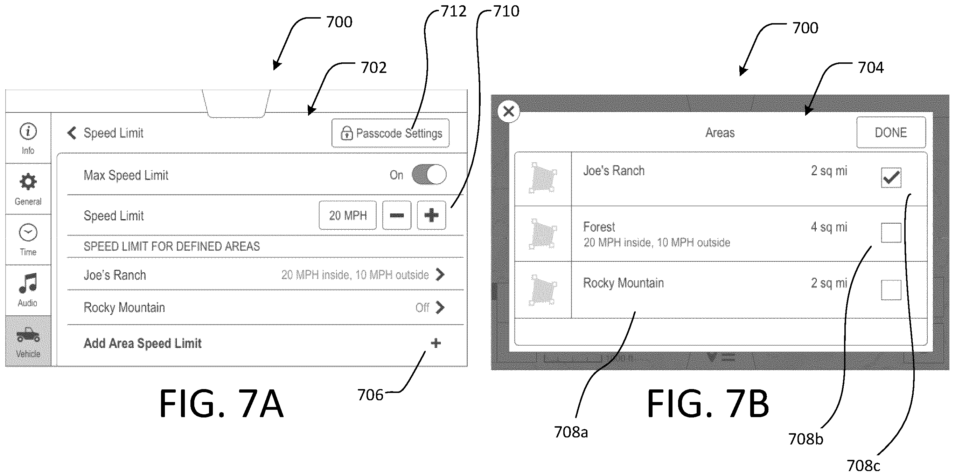

FIGS. 7A-7B illustrates a system 700 for controlling vehicle operations based on geographic location. FIG. 7A illustrates a first user interface 702 for controlling vehicle operations and FIG. 7B illustrates a second user interface 704 for controlling vehicle operations. In some examples, the system 700 includes a display of a computing device, such as an in-vehicle display of a vehicle (e.g., vehicle 200 of FIG. 2) to manage geofencing and control vehicle functionality.

In some examples, a display that displays the first user interface 702 and the second user interface 704 is the same or similar to the display for displaying the user interface 100 of FIG. 1. For example, the display can include a geographic map. In some examples, the system 700 allows users to define geofences (e.g., geographic boundaries) directly on the vehicle's display (e.g., rather than through an external computing device like a phone). Such capability can be advantageous for allowing users to create geofences on a vehicle's own display, even when a vehicle does not have connectivity (e.g., no internet connection, no cellular reception, etc.). In some examples, techniques disclosed herein can also be performed on an external computing device, such as a phone, tablet, or other portable device.

In some examples, the geofences can be defined by drawing shapes on the display. For example, the user can make a selection 706 to add a geofence corresponding to vehicle functionality. In some examples, choosing the selection 706 can generate the second user interface 704, such as to allow a user to select a geofence from a plurality of pre-defined geofences 708 to activate and/or de-activate (e.g., first pre-defined geofence 708a, second pre-defined geofence 708b, and third pre-defined geofence 708c). In some examples, the second user interface 704 includes the plurality of pre-defined geofences 708 in rows, with on/off switches to activate/de-activate one or more of the geofences 708. In some examples, the second user interface 704 also includes descriptions of the plurality of pre-defined geofences 708, such as names, shapes, associated vehicle functionalities, sizes, etc. The descriptions of the pre-defined geofences 708 may include text, numbers, colors, and/or graphics.

In some examples, users can set vehicle functionality (e.g., speed limits, power limits, light settings, attachment settings) within, outside of, and/or along defined geofences. For example, in the first user interface 702, a user can use a speed limit feature 710 (e.g., buttons) to define a speed limit for the first pre-defined geofence 708a, which is activated. Additional and/or alternative vehicle functionality which can be configured based on geofences should be recognized by those of ordinary skill in the art, at least in view of methods 300, 400, 500, 600, 700, 800, and/or 900 of FIGS. 3-9 disclosed herein.

In some examples, the user can add new geofences and/or edit the pre-defined geofences 708. For example, the user can define geofences that include waypoints, with edges extending between the way points. As another example, a user can select (e.g., on a map, such as shown on the user interface 100 of FIG. 1) geographic coordinates, points of interest, locations on the display that correspond to geographic coordinates, addresses, and/or other indicators of geographic locations to create the geofences. In some examples, geofences can include regular shapes. In some examples, geofences can include irregular shapes. In some examples, geofences can include closed shapes. In some examples, geofences can include open shapes (e.g., a line or threshold that affects vehicle functionality when crossed). In some examples, the system 700 supports area-based geofencing, where vehicle functionality (e.g., speed limits, power limits, etc.) can be set for areas.

In some examples, users can use previously traveled paths to define geofences. For example, a vehicle can record and/or store paths that the vehicle has travelled and users can assign those paths to be geofences for controlling vehicle functionality. In some examples, the vehicle can record the paths the vehicle has travelled via a compass, GPS, odometer, inertial measurement unit (IMU), and/or other sensors located on the vehicle. This ability to record and/or store paths that a vehicle has travelled can be particularly advantageous where a route may be obscured on a map (e.g., hidden by building, trees, or other features), but a user has travelled along the route previously and knows it exists. This ability can also be advantageous for recording and/or storing paths travelled when the vehicle does not have wireless connectivity (e.g., no internet connection, no cellular connection, etc.). In some examples, the system 700 supports route-based geofencing, where vehicle functionality (e.g., speed limits, power limits, etc.) can be set for specific routes, such as those travelled along be a vehicle, pre-defined in a system, and/or known to a user.

In some examples, the system 700 includes a touch screen on the vehicle's display. In such examples, the touch screen can be used to provide input to the system 700, such as to select one or more features on the first user interface 702 and/or the second user interface 704. In some examples, the system 700 can receive input via steering wheel buttons, steering wheel movements, a keypad (e.g., five-way user-interface), console buttons, dials, voice commands, tracked gestures, gaze input, and/or other user interface controls that may be recognized by those of ordinary skill in the art.

In some examples, the system 700 includes passcode protection to prevent unauthorized changes to the vehicle functionality settings. In some examples, the passcode protection can be updated via a passcode settings feature 712. In some examples, a user must enter a passcode to be able to change the vehicle functionality settings associated with one or more geofences. In some examples, a user must enter a passcode to be able to edit, add, and/or delete a geofence. In some examples, when a geofence is added, it can be assigned a name and vehicle functionality settings for within, outside, and/or along the geofence.

In some examples, geofenced settings can be synchronized with a central server, such as via direct wireless communication and/or communication through an intermediary device (e.g., a phone). In some examples, the synchronization allows changes to be made on either the vehicle or a computing device remote from the vehicle and be synchronized with the central server, such as when the vehicle has access to a communication network (e.g., internet access, cellular access, satellite access, etc.). In examples, geofences may be synchronized (e.g., via the central server) between multiple vehicles.

In some examples, the system 700 includes customized geofences for rider profiles. For example, different users and/or different types of users can have customized settings, including speed limits, lighting settings, power settings, and/or other vehicle functionalities. In some examples, different types of users can be based on an age of the users, an experience level of the users, a title of the users, a certification level of the users, and/or other factors which may be recognized by those of ordinary skill in the art.

In some examples, each rider profile can have unique geofences and vehicle functionality settings, which can be activated based on the user's profile. For example, a user can provide input to a vehicle to prompt the vehicle to configure itself based on a rider profile associated with the user. As another example, the vehicle may be able to detect the rider profile associated with the user, such as via a radio frequency identification (RFID), a short range wireless frequency identification, a voice detection, a visual detection, and/or another form of detection recognized by those of ordinary skill in the art. In some examples, the system 700 can control any of a variety of vehicle characteristics based on geofencing, such as suspension modes, noise levels, vehicle modes (e.g., comfort mode on rough terrain), vehicle attachment settings, and/or other vehicle functionality that may be recognized by those of ordinary skill in the art at least in view of the teachings herein.

In some examples, time-bound and temperature-bound factors can also be used to control vehicle functionality with geofences, such as the geofences 708. For example, speed limits could be adjusted based on seasonal changes or specific events. In some examples, speed limits could be lowered in the winter, such as due to snow and/or ice being outside (as detected based on time of year, temperature sensors on the vehicle, and/or weather forecasts in the geographic region of the vehicle). In some examples, speed limits for a trail could be lowered on the weekends (e.g., Saturday and/or Sunday) and/or on holidays, such as because the trails are likely to be more crowded on the weekends and/or holidays. Additional and/or alternative examples of vehicle functionality that can be controlled based on a combination of geofences, times, and/or temperatures should be recognized by those of ordinary skill in the art at least in view of the teachings herein.

In some examples, mechanisms provided herein can be advantageous for agricultural contexts. For example, if a geofence is drawn corresponding to a farm, then a user may want to set a maximum speed for performing agricultural activities with their vehicle on the farm. Additionally and/or alternatively, a user may want to set a minimum speed for performing agricultural activities with their vehicle on the farm, such as to maintain a consistent speed with their vehicle while spraying crops.

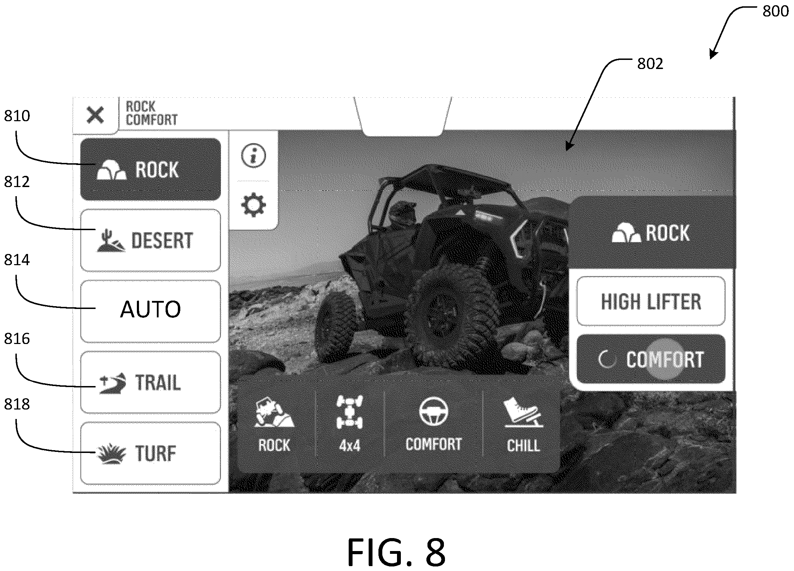

FIG. 8 illustrates an example system 800 for controlling vehicle operations based on geographic location. The system 800 includes a user interface 802 for controlling vehicle operations. In some examples, the system 800 includes a display of a computing device, such as an in-vehicle display of a vehicle (e.g., vehicle 200 of FIG. 2) to manage geofencing and/or control vehicle functionality. In some examples, a display that displays the first user interface 802 is the same or similar to the display for displaying the user interface 100 of FIG. 1, the user interface 702 of FIG. 7A, and/or the user interface 704 of FIG. 7B.

In some examples, the system 800 includes a touch screen on the vehicle's display. In such examples, the touch screen can be used to provide input to the system 800, such as to configure (e.g., select) one or more vehicle modes on the user interface 802. In some examples, the system 800 can receive input via steering wheel buttons, steering wheel movements, a keypad (e.g., five-way user-interface), console buttons, dials, voice commands, tracked gestures, gaze input, and/or other user interface controls that may be recognized by those of ordinary skill in the art.

In some examples, vehicle operators (such as operators of ORVs) can encounter different types of terrain while driving their vehicles. In some examples, the vehicle operators may not know what type of terrain lies ahead for them. In some examples, techniques provided herein are advantageous for increasing the operator's confidence that they will have their vehicle appropriately configured for the terrain they are headed toward. For example, the vehicle can be automatically configured based on the vehicle's current location, the direction the vehicle is travelling, and historical vehicle data, to appropriately configure the operator's vehicle for the terrain ahead.

In some examples, vehicles provided herein can receive input to configure one or more vehicle modes of a plurality of vehicle modes. The plurality of vehicle modes can include a first vehicle mode 810, a second vehicle mode 812, a third vehicle mode 814, a fourth vehicle mode 816, and a fifth vehicle mode 818, as illustrated on the example user interface 802. For example, the vehicle modes can include certain settings to configure one or more aspects of the vehicle. In some examples, vehicle modes include respective settings for the vehicle's traction, throttle response, speed settings, power settings, suspension settings, lighting settings, control settings, wheel settings, cooling settings, heating settings, attachment settings, and/or handling characteristics to provide experiences tailored to particular terrain. Additional and/or alternative vehicle settings that may be adapted based on a selected vehicle mode should be recognized by those of ordinary skill in the art.

In some examples, a user (e.g., vehicle operator) can provide input to the system 800 to select one or more of the vehicle modes 810-818. In some examples, the one or more vehicle modes includes automatic vehicle mode selector 814, which enables the use of historical vehicle data to determine what vehicle mode should be activated based on the location of the vehicle. In some examples, the automatic vehicle mode selector 814 enables the use of crowdsourced location-based vehicle mode preferences to determine what vehicle mode should be activated based on the location of the vehicle.

An example vehicle mode includes two-wheel drive (2WD), where power is sent only to the rear wheels of a vehicle, with the front wheels being disengaged. In some examples, the 2WD mode is used primarily for everyday driving on flat, dry surfaces and/or light trails where full traction is not needed. In some examples, the 2WD mode is more fuel-efficient than a 4WD mode and/or reduces drivetrain wear.

Another example vehicle mode includes all-wheel drive (AWD). In examples, for the AWD mode, the rear wheels of a vehicle drive the vehicle until the vehicle's system senses that the rear wheels are slipping. In examples, when slipping is detected, power is automatically sent to the front wheels of the vehicle as well for additional traction. In examples, the AWD mode is used for moderate off-road conditions where more traction is needed, such as on rocky, loose, and/or muddy terrain. In examples, the AWD mode engages the front wheels selectively based on certain terrain that is encountered, making it a flexible choice.

Another example vehicle mode includes four-wheel drive (4WD). In examples, the 4WD mode includes engaging both front and rear wheels simultaneously (e.g., with equal power distribution). In examples, all wheels of a vehicle remain engaged as long as the 4WD mode is active (e.g., the 4WD mode is locked). In examples, the 4WD mode remains engaged, regardless of slipping, as long as the 4WD mode remains active. In examples, the 4WD mode is used for extremely challenging terrains like steep hills, deep mud, snow, and/or other surfaces where relatively high traction is desired.

Another example vehicle mode includes trail mode 816, which can include adjusting vehicle control, power delivery, and handling. For example, a throttle response can be set for gradual power delivery to avoid loss of control on narrow paths or loose surfaces. In examples, power output can be moderated to allow for precise navigation of obstacles, such as rocks or tree roots. In examples, steering sensitivity is calibrated for the trail mode 816 to provide maneuverability around obstacles and on sharp turns, aiding vehicle operators in maintaining control on trails. In examples, vehicle suspension, if adjustable, is set to balance absorption of terrain bumps with stability over rough paths. In examples, suspension can be dynamically adjusted in real time, to responds to trail conditions that a vehicle is facing. In some examples, trail mode 816 includes activating AWD mode to provide power to all four wheels, such as on dirt, gravel, or mud.

Another example vehicle mode includes turf mode 818 (e.g., rear differential unlock), where only one rear wheel is powered, while another rear wheel spins freely. In examples, the turf mode 818 is used on delicate or maintained surfaces like grass, gravel driveways, and/or other areas where a vehicle operator may want to avoid tearing up the ground. In examples, the turf mode 818 allows for tight, controlled turns without damaging a surface on which the vehicle is travelling.

Another example vehicle mode includes a throttle control mode (e.g., Eco mode, Standard mode, Sport mode, etc.). In examples, an Eco mode limits throttle response and increases fuel efficiency. In examples, an Eco mode is used for relaxed, fuel-saving driving. In examples, a Standard mode provides a balanced throttle response for normal driving conditions. In examples, a Sport mode increases throttle sensitivity for a more aggressive response, giving vehicle operators quicker acceleration and an increased top speed (relative to the other throttle control modes). In examples, the Sport mode is used for high-performance situations and/or open areas.

Another example vehicle mode includes rock crawl mode 810. In examples, the rock crawl mode 810 includes adjusting throttle response to be more sensitive at low speeds for precise control. In examples, the sensitive throttle response at low speeds is coupled with a low gear ratio (e.g., in vehicles with high and low gear ranges). In examples, the rock crawl mode 810 is used for technical, low-speed maneuvers on rocky and/or uneven terrain. In examples, the rock crawl mode 810 provides precise control and slow movement to navigate obstacles, such as on the rocky and/or uneven terrain.

Another example vehicle mode includes desert mode 812. In examples, the desert mode 812 includes adjusting a vehicle's suspension settings for increased control at high speeds on open desert terrain. In examples, the desert mode 812 reduces body roll to increase stability on loose, sandy surfaces, improving handling over dunes or flat desert plains. In examples, the desert mode 812 includes providing controlled throttle response to prevent wheels of the vehicle from digging into the sand or losing traction. In some examples, the desert mode 812 includes adapting power delivery between the front and rear wheels of the vehicle to avoid spinning or getting stuck, which can be common in sandy terrain. In some examples, high-speed desert driving can be taxing on an engine of a vehicle, so the desert mode 812 can include increasing cooling of the engine.

Another example vehicle mode includes a low-gear range mode. In examples, the low gear range mode reduces a gear ratio to provide increased torque at low speeds. In examples, the low gear range mode is used for towing, carrying heavy loads, and/or handling steep inclines where increased power and control are desired.

In some examples, the different vehicle modes described herein allow vehicle operators to configure their vehicle's performance based on current driving conditions. In some examples, the different vehicle modes allow for manufacturers of the vehicles to provide vehicles to consumers that are adaptable to a wide range of environments and tasks. While specific types of vehicle modes are disclosed, additional and/or alternative types of vehicle modes should be recognized by those of ordinary skill in the art and be interoperable with techniques described herein.

In some examples, one or more different types of vehicle settings (e.g., speed settings, power settings, suspension settings, lighting settings, control settings, wheel settings, cooling settings, heating settings, attachment settings, etc.) can be adapted in a first vehicle mode and one or more different types of vehicle settings can be adapted in a second vehicle mode. In some examples, the same types of vehicles settings can be adapted in different vehicle modes, but in different ways (e.g., with different values configured for the settings).

Techniques provided herein include recording data for what vehicle modes operators are using for various geographic regions. In some examples, the geographic regions can be defined by geofences. For example, the geofences can be evenly defined in coordinate grids. Additionally and/or alternatively, geofences can be defined according to customized inputs from a user, such as using the techniques described earlier herein with respect to FIGS. 7A and 7B. In some examples, the geographic regions are otherwise defined, such as using techniques that may be recognized by those of ordinary skill in the art.

In some examples, the recorded data is stored with and/or associated with an operator's rider profile. For example, the rider profile can include an indication of the operators age, experience level, driving style, title, certification level, and/or other factors. In some examples, the recorded data incudes indications of manual selections of modes for a vehicle. In some examples, the recorded data can be transmitted to a server with indications of the location at which the selections were made, to aggregate and record what vehicle modes are being selected for what geographic regions, such as across multiple vehicles. In some examples, the indications of manual selections and locations can be stored locally on a vehicle. In some examples, the indications of manual selections and locations can be stored on a vehicle, such as until the vehicle has connectivity (e.g., internet connectivity, cellular connectivity, and/or satellite connectivity) to transmit the stored data to a remote computing device. In some examples, the indications of manual selections and locations can be uploaded to a remote computing device automatically (e.g., at regular and/or irregular intervals). In some examples, the indications of manual selections and locations can be uploaded to a remote computing device in response to an event, such as a user instructing the vehicle to upload the manual selection and locations to the remote computing device.

In some examples, techniques provided herein include determining what the most used vehicle modes used are within various geographic regions. In some example, the most commonly used vehicle mode is the mode automatically selected for use when an automated vehicle mode selection is activated. In some examples, the automated vehicle mode selection selects the most-used vehicle modes for an operator, according to their rider profile. For example, the rider profile can include an indication of the operators age, experience level, title, certification level, and/or other factors. In some examples, the automated vehicle mode selection selects the most used vehicle mode for an operator based on what vehicle modes have been selected by other operators with one or more of the same factors (and/or similar factors, such as within a predefined threshold) in their rider profile.

In some examples, data recorded to indicate what vehicle modes are used by operators in particular geographic regions can be used to make decisions by systems provided herein for what vehicle mode should be used by other operators to confidently and/or comfortably drive in the geographic region. In some examples, the automated vehicle mode selection, when activated, can continuously select different vehicle modes in response to changes in terrain, based on the geographic location of the vehicle according to a grid of geographic regions or regions generated according to any of a variety of other segmentation schemes. For example, geographic locations corresponding to vehicle mode changes may be clustered, thereby generating a region in which the corresponding vehicle mode is applied according to the automated vehicle mode selection aspects described herein. This ability can help operators predict what vehicle mode to which they should be setting their vehicle, such as if the operators are in a geographic region with which they are unfamiliar.

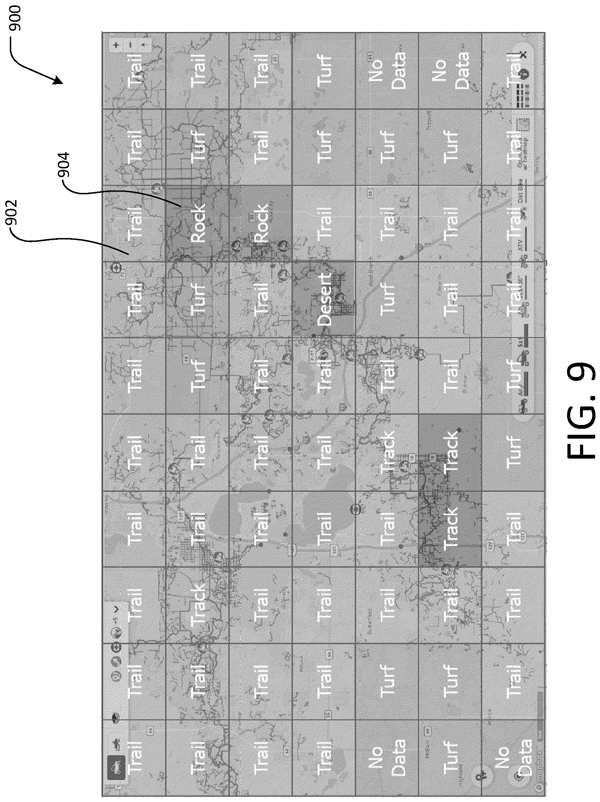

FIG. 9 illustrates an example grid 900 with example vehicle mode data, according to some aspects described herein. The example grid 900 includes a plurality of grid spaces, such as a first grid space 902 and a second grid space 904. In some examples, each grid space on the grid 900 corresponds to a geofenced region. In some examples, the geofenced regions on the grid 900 are created using one or more techniques described earlier herein, such as with respect to FIG. 1, FIG. 7A, and/or FIG. 7B.

In some examples, the first grid space 902 corresponds to a first vehicle mode (e.g., trail mode) and the second grid space 904 corresponds to a second vehicle mode (e.g., rock crawl mode).

In some examples, the first vehicle mode is automatically assigned to the first grid space 902 and/or the second vehicle mode is automatically assigned to the second grid space 904. For example, vehicle modes can be assigned to grid spaces based on historical vehicle mode data (e.g., corresponding to a population of vehicles) for the geofenced regions. For instance, if a majority of users manually select the first vehicle mode on their vehicles (e.g., according to rock crawl mode 810, desert mode 812, trail mode 816, turf mode 818, etc.), while physically within the first grid space 902, then the first grid space 902 may be assigned the first vehicle mode. The population of vehicles may be segmented according to rider style, time of day/year, season, and/or vehicle type, among other examples. Once the first vehicle mode is assigned to the first grid space 902, then the automated vehicle mode selector may select the first vehicle mode for an operator of a vehicle who has the automated vehicle mode selector enabled and is within the first grid space 902.

In some examples, the amount of historical data required to assign a vehicle mode to a particular grid space on the grid 900 may be configurable. For example, there may need to be at least one operator who has selected a vehicle mode within a grid space for the vehicle mode to be assigned to the grid space. As another example, there may need to be at least ten operators who have selected a vehicle mode within a grid space for the vehicle mode to be assigned to the grid space. In some examples, there may need to be at least ten instances of vehicle modes being selected within a grid space, and whichever particular vehicle mode was selected the most amongst the ten instances of vehicle modes is the particular vehicle mode assigned to the grid space.

In some examples, indications of manual selections of modes for a vehicle can be transmitted to a server with indications of the location at which the selections were made, to aggregate and record what vehicle modes are being selected for what geographic regions, such as across multiple vehicles. In some examples, the indications of manual selections and locations can be stored on a vehicle and automated selection of vehicle modes can be determined via a processor local to the vehicle, such that the automated selection of vehicle modes can be unique to a particular vehicle.

In some examples, the indications of manual selections and locations can be stored on a vehicle, such as until the vehicle has connectivity (e.g., internet connectivity, cellular connectivity, and/or satellite connectivity) to transmit the stored data to a remote computing device. In some examples, the indications of manual selections and locations can be uploaded to a remote computing device automatically (e.g., at regular and/or irregular intervals). In some examples, the indications of manual selections and locations can be uploaded to a remote computing device in response to an event, such as a user instructing the vehicle to upload the manual selection and locations to the remote computing device.

While the grid 900 includes a plurality of quadrilateral shapes having equal size that are evenly distributed, those of ordinary skill in the art should recognize the techniques provided herein can be applied to any number of geofenced regions that have any of a plurality of different shapes, sizes, and/or distributions across geographic regions.

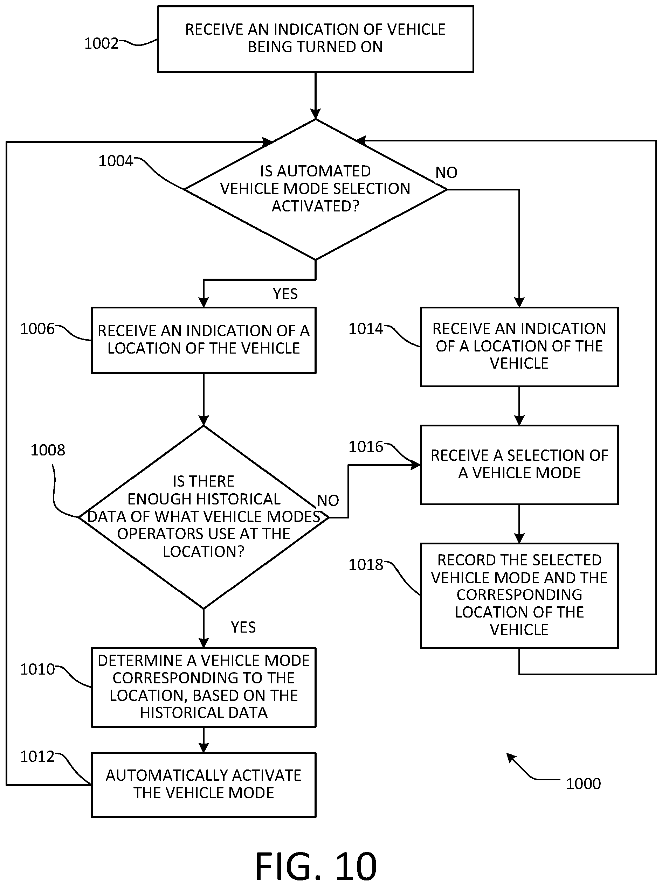

FIG. 10 illustrates an example method 1000, according to some aspects described herein. The example method 1000 may be a method for controlling vehicle configurations based on geographic location. In examples, aspects of method 1000 are performed by a device, such as computing device 1102 and/or server 1104, discussed below with respect to FIG. 11. Further, in some examples, aspects of the vehicle discussed with respect to method 1000 may be the same or similar as aspects of the vehicle 200 discussed earlier herein with respect to FIG. 2. In some examples, method 1000 may be implemented via software that is downloadable to a vehicle. In some examples, method 1000 may be implemented via software that is pre-installed on a vehicle.

Method 1000 begins at operation 1002, wherein an indication of a vehicle being turned on is received. For example, the indication can be received via a key being turned, a button being pressed, weight being present on a seat of the vehicle, and/or via another input which one of ordinary skill in the art will recognize is associated with a vehicle being turned on.

At operation 1004, it is determined whether an automated vehicle mode selection is activated. For example, vehicles provided herein can have a plurality of vehicle modes (e.g., rock crawl modes, desert modes, trail modes, turf modes, 4WD modes, 2WD modes, AWD modes, etc.). In some examples, operators can manually select their vehicle modes. For example, if a user is experienced with their vehicle and the geographic area in which they are operating, the user may know what vehicle mode to which they should set their vehicle. In some examples, operators can choose to have their vehicle mode selected automatically. For example, if a user does not know what terrain they are approaching, lacks confidence in settings the vehicle mode of their vehicle for the terrain, and/or wants increased ease in operating their vehicle, the user can choose to set their vehicle mode automatically using techniques provided herein.

If it is determined that automated vehicle mode selection is activated, then method 1000 branches "YES" to operation 1006, where an indication is received of a location of the vehicle. In some examples, the location may be received via a location sensor of the vehicle, such as a GPS, RFID, Wi-Fi, cellular data, Bluetooth, or other location-related technology recognized by those of ordinary skill in the art. In some examples, the location sensor may be part of the vehicle. In some examples, the location sensor may be associated with the vehicle. For example, in some aspects, the location may be received via a mobile computing device associated with the vehicle, such as a cellphone, smart watch, mobile computer, or the like. In some examples, the mobile computing device may be in direct communication with the vehicle. Alternatively, in some examples, the mobile computing device may be in indirect communication with the vehicle. For example, the mobile computing device may communicate with the vehicle via an intermediary communication device, and/or the mobile computing device may communicate with a remote computing device (e.g., server 1104), without being in direct communication with the vehicle.

In some examples, the location of the vehicle can be associated with a geofence. For example, the location can be determined to be within, along, or outside of a geofence. In some examples, the indication of the location is an indication of a particular coordinate of the vehicle. In some examples, the indication of the location is an indication of a geofence in which, along which, and/or outside of which the vehicle is located.

At operation 1008, it is determined whether there is enough historical data of what vehicle modes operators use at the location. For example, techniques provided herein can include a predetermined threshold for an amount of historical vehicle mode selections at the location to be considered enough. In some examples, operation 1008 can be performed by a computing device remote from the vehicle, such as a server (e.g., server 1104 of FIG. 11). For example, an indication of the location of the vehicle (e.g., based on operation 1006) can be transmitted to the server to determine whether there is enough historical data, such as based on historical data stored in one or more databased accessible via the server. In some examples, the historical data and/or an indication of the historical data (e.g., the grid 900) can be stored locally on the vehicle. For example, the historical data and/or indication thereof can be synced to the vehicle from the server, such as when the vehicle has connectivity (e.g., internet connectivity, cellular connectivity, satellite connectivity, etc.).

In some examples, at least one vehicle operator selecting a vehicle mode within a geographic region including the location is deemed to be enough historical data. In some examples, at least ten vehicle operators, at least fifty vehicle operators, or at least one-hundred vehicle operators selecting a vehicle mode within a geographic region including the location is deemed to be enough historical data. In some examples, there may need to be at least ten instances of vehicle modes being selected within a geographic region including the location, and whichever particular vehicle mode was selected the most amongst the ten instances of vehicle modes is the particular vehicle mode assigned to the location.

In some examples, more than half of all vehicle mode selections in a geographic region including the location must be the same vehicle mode selection for the historical data to be enough. In some examples, more than three-fourths of all vehicle mode selections in a geographic region including the location must be the same vehicle mode selection for the historical data to be enough. In some examples, a percentage of vehicle mode selections that must be the same within a geographic region including the location is reduced if the amount of overall vehicle mode selections is relatively large (e.g., over one thousand vehicle mode selections).

Regarding the collection of the historical data, in some examples vehicle mode selections can be transmitted to a server with indications of the location at which the selections were made, to aggregate and record what vehicle modes are being selected for what geographic regions. In some examples, the vehicle mode selections and corresponding locations are aggregated from across multiple different vehicles. In some examples, the indications of manual selections and locations can be stored on a particular vehicle without receiving indications of manual selections and locations from other vehicles, such that the automated selection of vehicle modes can be unique to the particular vehicle.

In some examples, the indications of manual selections and locations can be stored on a vehicle, such as until the vehicle has connectivity (e.g., internet connectivity, cellular connectivity, and/or satellite connectivity) to transmit the stored data to a remote computing device. In some examples, the indications of manual selections and locations can be uploaded to a remote computing device automatically (e.g., at regular and/or irregular intervals). In some examples, the indications of manual selections and locations can be uploaded to a remote computing device in response to an event, such as a user instructing the vehicle to upload the manual selection and locations to the remote computing device.

Generally, the indications of manual vehicle mode selections and locations can form a dataset of historical data, for techniques herein to use in automatically activating particular vehicle modes for operators of vehicles, based on the locations of the vehicles.

If it is determined that there is enough historical data of what vehicle modes operators use at the location, then method 1000 branches "YES" to operation 1010, where a vehicle mode corresponding to the location is determined. For example, the vehicle mode may be determined based on the historical vehicle mode data. In some examples, determined vehicle mode is the most-used vehicle mode at the location, according to the historical data.

In some examples, the vehicle mode is determined at operation 1010, according to an operator's rider profile. For example, the rider profile can include an indication of the operators age, experience level, driving style, title, certification level, and/or other factors. In some examples, a request can be sent from the vehicle (e.g., to a server) to receive the determined vehicle mode. The request may include an indication of the rider profile (and/or one or more aspects of the rider profile), to help determine the vehicle mode at operation 1010. In some examples, the vehicle mode determined at operation 1010 is the most used vehicle mode for an operator based on what vehicle modes have been selected by other operators with one or more of the same factors (and/or similar factors, such as within a predefined threshold) in their rider profile at the location. Accordingly, the rider profiles can provide an extra degree of customization for how vehicle modes are automatically selected, such as based on factors associated with an operator (e.g., in addition to the location of the vehicle).

In some examples, historical data can be temporally weighted. For example, more-recent data can be assigned greater weight in determining what vehicle mode should be selected than less-recent data. In some examples, outlier detection algorithms can be applied to the historical data to clean the historical data, such as before the determination at operation 1010 is performed.

At operation 1012, the vehicle mode determined from operation 1010 is automatically activated. For example, one or more settings of the vehicle can be adapted based on the vehicle mode being activated. In some examples, the one or more settings include settings for the vehicle's traction, throttle response, speed settings, power settings, suspension settings, lighting settings, control settings, wheel settings, cooling settings, heating settings, attachment settings, and/or handling characteristics to provide experiences tailored to particular terrain. Additional and/or alternative vehicle settings that may be adapted based on a selected vehicle mode should be recognized by those of ordinary skill in the art.

In some examples, the vehicle modes include a 2WD mode, an AWD mode, a 4WD mode, a trail mode, a turf mode, a throttle control mode, a rock crawl mode, a low-gear range mode, and/or a high-gear range mode. In some examples, the different vehicle modes described herein allow for a vehicle's performance to be configured based on current driving conditions. In some examples, the different vehicle modes allow for vehicles to be adaptable to a wide range of environments and tasks. While specific types of vehicle modes have been touched on herein, additional and/or alternative types of vehicle modes should be recognized by those of ordinary skill in the art and can be interoperable with techniques described herein.

Returning to operation 1004, if it is determined that the automated vehicle mode selection is not activated, then method 1000 branches "NO" to operation 1014, where an indication of a location of the vehicle is received. The indication of the location of the vehicle may be received in the same or similar manner at operation 1014 as it would be at operation 1006.

From operation 1004, the method 1000 may advance to operation 1016. In addition and/or alternatively to advancing to operation 1016 from operation 1014, if it is determined, at operation 1008, that there is not enough historical data of what vehicle modes operators use at the vehicle's location, then the method 1000 may advance to operation 1016.

At operation 1016, a selection (e.g., manual selection) of a vehicle mode is received. The selection of the vehicle mode can be performed by providing input to the vehicle, such as via the system 800 of FIG. 8. For example, a user can provide the selection of the vehicle mode via a touchscreen, steering wheel buttons, steering wheel movements, a keypad (e.g., five-way user-interface), console buttons, dials, voice commands, tracked gestures, gaze input, and/or other user interface controls that may be recognized by those of ordinary skill in the art. In some examples, the vehicle modes include a 2WD mode, an AWD mode, a 4WD mode, a trail mode, a turf mode, a throttle control mode, a rock crawl mode, a low-gear range mode, and/or a high-gear range mode. Additional and/or alternative vehicle modes should be recognized by those of ordinary skill in the art and can be interoperable with techniques described herein. In instances where flow arrives at operation 1016 via determination 1008, an indication may be presented that automatic mode selection is unavailable, such that the user is encouraged to select a different operating mode accordingly.

At operation 1018, the selected vehicle mode is recorded with the corresponding location of the vehicle. In some examples, an indication of the selected vehicle mode can be transmitted to a server with an indication of the location at which the selection was made. In some examples, indications of vehicle mode selections and corresponding locations can be aggregated to record what vehicle modes are being selected for what geographic regions. In some examples, the vehicle mode selections and corresponding locations are aggregated from across multiple different vehicles. In some examples, the indications of manual selections and locations can be stored on a particular vehicle without receiving indications of manual selections and locations from other vehicles, such that the automated selection of vehicle modes can be unique to the particular vehicle.

In some examples, the indications of manual selections and locations can be stored on a vehicle, such as until the vehicle has connectivity (e.g., internet connectivity, cellular connectivity, and/or satellite connectivity) to transmit the stored data to a remote computing device. In some examples, the indications of manual selections and locations can be uploaded to a remote computing device automatically (e.g., at regular and/or irregular intervals). In some examples, the indications of manual selections and locations can be uploaded to a remote computing device in response to an event (e.g., a user instructing the vehicle to upload the manual selection and location to the remote computing device).

Generally, the indications of vehicle mode selections and locations can form a dataset of historical data, for techniques herein to use in determining what vehicle modes to automatically activate for operators, based on the locations of the vehicles.

Method 1000 may terminate at operation 1012 and/or operation 1018. Alternatively, method 1000 may return to operation 1004 (or another operation of method 1000) to provide an iterative loop, such as of determining whether an automated vehicle mode selection is activated for a vehicle, and if so, automatically activating a particular vehicle mode based on the location of the vehicle and historical vehicle mode selections corresponding to the location of the vehicle.

FIG. 11 shows an example of a system 1100, in accordance with some aspects of the disclosed subject matter. The system 1100 may be a system for adapting settings of a vehicle, such as configuring an LSV mode, a low SPL mode, a lighting mode, an attachment mode, and/or a vehicle mode, in accordance with any one or more of FIGS. 1-10. The system 1100 includes one or more computing devices 1102, one or more servers 1104, one or more input data sources 1106, and a communication network or network 1108. In some examples, the computing device 1102 can receive input data 1110 from the input data source 1106. Additionally, or alternatively, in some examples, the network 1108 can receive input data 1110 from the input data source 1106. Accordingly, in some examples, the computing device 1102 may be included in a vehicle (e.g., vehicle 200), such by being a controller for the vehicle. Additionally, or alternatively, in some examples, the computing device 1102 may be a mobile computing device, such as a smartphone, tablet, wearable device, etc., as may be associated with a rider of the vehicle.

In some examples, computing device 1102 includes a communication system 1112, geofence location engine or component 1114, and/or a vehicle-limiting engine or component 1116. In some embodiments, computing device 1102 can execute at least a portion of the geofence location engine 1114 to determine a location of a vehicle, with respect to one or more geofences, based on the input data 1110. In some examples, the computing device 1102 can execute at least a portion of the vehicle-limiting component 1116 to enable and/or disable modes of a vehicle (e.g., an LSV mode, a low SPL mode, a lighting mode, an attachment mode, and/or a vehicle mode).

In some examples, server 1104 includes a communication system 1118, geofence location engine or component 1120, and/or a vehicle-limiting engine or component 1122. In some embodiments, server 1104 can execute at least a portion of the geofence location engine 1120 to determine a location a vehicle, with respect to one or more geofences, based on the input data 1110. In some examples, the server 1104 can execute at least a portion of the vehicle-limiting component 1122 to enable and/or disable modes of a vehicle (e.g., an LSV mode, a low SPL mode, a lighting mode, an attachment mode, and/or a vehicle mode).

Additionally, or alternatively, in some examples, computing device 1102 can communicate data received from input data source 1106 to the server 1104 over a communication network 1108, which can execute at least a portion of the geofence location component 1114, 1120 and/or the vehicle-limiting component 1116, 1122. In some examples, the geofence location component 1114, 1120 executes one or more portions of methods/processes disclosed herein and/or recognized by those of ordinary skill in the art, in light of the present disclosure. In some examples, the vehicle-limiting component 1116, 1122 executes one or more portions of methods/processes disclosed herein and/or recognized by those of ordinary skill in the art, in light of the present disclosure.

In some examples, computing device 1102 and/or server 1104 can be any suitable computing device or combination of devices, such as a controller, a desktop computer, a vehicle computer, a mobile computing device (e.g., a laptop computer, a smartphone, a tablet computer, a wearable computer, etc.), a server computer, a virtual machine being executed by a physical computing device, a web server, etc. Further, in some examples, there may be a plurality of computing devices 1102 and/or a plurality of servers 1104.

In some examples, input data source 1106 can be any suitable source of input data (e.g., data generated from a computing device, data stored in a repository, data generated from a software application, etc.) In some examples, input source 1106 can include memory storing input data (e.g., local memory of computing device 1102, local memory of server 1104, cloud storage, portable memory connected to computing device 1102, portable memory connected to server 1104, etc.). In some examples, input data source 1106 can include an application configured to generate input data and provide the input data via a software interface. In some examples, input data source 1106 can be local to computing device 1102. In some examples, input data source 1106 can be remote from computing device 1102, and can communicate input data 1110 to computing device 1102 (and/or server 1104) via a communication network (e.g., communication network 1108). In some examples, the input data source 1106 may include multiple sources of input data.

In some examples, the input data 1110 may include data retrievable from a location positioning system, such as GPS, cellular, Wi-Fi, RFID, etc. In some examples, input data 1110 may include user-inputs to a vehicle, historical vehicle data, geofence data, and/or associated regulation data (e.g., for areas within the geofence) retrievable from a remote and/or local data store (e.g., of server 1104 or computing device 1102, respectively). In some examples, the input data 1110 may include vehicle information retrievable from a vehicle controller, sensors of a vehicle (e.g., seatbelt sensor, door sensor, seat sensor, attachment sensors, etc.), and/or components of a vehicle (e.g., engine, battery, etc.).

In some examples, communication network 1108 can be any suitable communication network or combination of communication networks. For example, communication network 1108 can include a Wi-Fi network (which can include one or more wireless routers, one or more switches, etc.), a peer-to-peer network (e.g., a Bluetooth or Bluetooth Low Energy network), a cellular network (e.g., a 3G network, a 4G network, a 5G network, etc., complying with any suitable standard), a wired network, a Controller Area Network (CAN), etc. In some examples, communication network 1108 can be a local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, a wide area network (WAN), a public network (e.g., the Internet), a private or semi-private network (e.g., a corporate or university intranet), any other suitable type of network, or any suitable combination of networks. In some examples, communication links (arrows) shown in FIG. 11 can each be any suitable communications link or combination of communication links, such as wired links, fiber optics links, Wi-Fi links, Bluetooth^{®} links, cellular links, satellite links, etc.

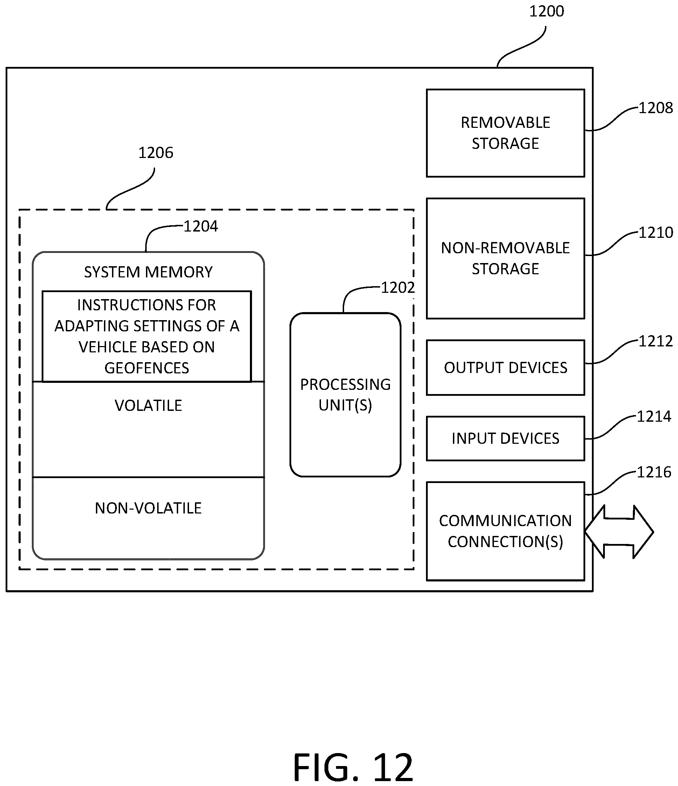

FIG. 12 illustrates a simplified block diagram of a device with which aspects of the present disclosure may be practiced in accordance with aspects of the present disclosure. The device may be a mobile computing device, for example. One or more of the present embodiments may be implemented in an operating environment 1200. This is only one example of a suitable operating environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 1200 typically includes at least one processing unit 1202 and memory 1204. Depending on the exact configuration and type of computing device, memory 1204 (e.g., instructions for one or more aspects disclosed herein, such as one or more aspects of methods/processes 300, 400, 500, 600, and/or 1000, described with respect to FIGS. 3, 4, 5, 6, and 10, respectively) may be volatile (such as RAM), non-volatile (such as ROM, flash memory, etc.), or some combination of the two. This most basic configuration is illustrated in FIG. 12 by dashed line 1206. Further, the operating environment 1200 may also include storage devices (removable, 1208, and/or non-removable, 1210) including, but not limited to, magnetic or optical disks or tape. Similarly, the operating environment 1200 may also have input device(s) 1214 such as remote controller, keyboard, mouse, pen, voice input, on-board sensors, etc. and/or output device(s) 1212 such as a display, speakers, printer, motors, etc. Also included in the environment may be one or more communication connections 1216, such as LAN, WAN, a near-field communications network, a cellular broadband network, point to point, etc.

Operating environment 1200 typically includes at least some form of computer readable media. Computer readable media can be any available media that can be accessed by the at least one processing unit 1202 or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

The operating environment 1200 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets and the Internet.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The following clauses illustrate example subject matter described herein.

Clause 1: A method for configuring a low-speed vehicle (LSV) mode of an off-road vehicle (ORV), the method comprising: receiving an indication of a location of the ORV; determining that the location of the ORV corresponds to being within a geofence; and in response to the determination, enabling the LSV mode of the ORV.

Clause 2: The method of clause 1, wherein the geofence corresponds to a municipality with one or more LSV regulations, and wherein the LSV mode defines a set of vehicle restrictions corresponding to the one or more LSV regulations of the municipality.

Clause 3: The method of clause 2, wherein a restriction of the set of vehicle restrictions includes a maximum allowable speed of the ORV based on the one or more LSV regulations.

Clause 4: The method of clause 2, wherein the one or more LSV regulations are stored in a database of LSV regulations that are each mapped to a corresponding geofence, each corresponding geofence being further associated with a respective municipality.

Clause 5: The method of any one of clauses 1 through 4, wherein the indication is a first indication, wherein the location is a first location, and wherein the method further comprises: receiving a second indication of a second location of the ORV; determining that the second location of the ORV corresponds to being outside of the geofence; and in response to the determination, disabling the LSV mode of the ORV.

Clause 6: The method of any one of clauses 1-4, wherein the indication is a first indication, wherein the location is a first location, wherein the geofence is a first geofence, wherein the enabling the LSV mode comprises enabling a first configuration of the LSV mode, and wherein the method further comprises: receiving a second indication of a second location of the ORV; determining that the second location of the vehicle corresponds to being within a second geofence; and in response to the determination, enabling a second configuration of the LSV mode of the ORV.

Clause 7: The method of clause 6, wherein the first configuration of the LSV mode corresponds to a first municipality, and wherein the second configuration of the LSV mode corresponds to a second municipality.

Clause 8: The method of any one of clauses 1-7, wherein the determination is performed onboard the ORV.

Clause 9: The method of any one of clauses 1-8, further comprising: generating a visual representation of the geofence; and displaying the visual representation.

Clause 10: A method for configuring a low sound pressure level (SPL) mode of a vehicle, the method comprising: receiving an indication of a location of the vehicle; determining that the location of the vehicle corresponds to being within a geofence; and in response to the determination, enabling the low SPL mode of the vehicle.

Clause 11: The method of clause 10, wherein the geofence corresponds to a municipality with one or more vehicle SPL regulations, and wherein the low SPL mode is configured based on the one or more vehicle SPL regulations of the municipality.

Clause 12: The method of clause 11, wherein the enabling the low SPL mode comprises reducing rotations-per-minute (RPM) of an engine of the vehicle.

Clause 13: The method of any one of clauses 11 or 12, wherein the enabling the low SPL mode comprises actuating baffles in an exhaust of the vehicle, thereby muffling noise from the exhaust via the baffles.

Clause 14: The method of any one of clauses 11 through 13, wherein the one or more vehicle SPL regulations are stored in a database of vehicle SPL regulations which are mapped to corresponding geofences, the corresponding geofences being associated with respective municipalities.

Clause 15: The method of clause 10, wherein the indication is a first indication, wherein the location is a first location, and wherein the method further comprises: receiving a second indication of a second location of the vehicle; determining that the second location of the vehicle corresponds to being outside of the geofence; and in response to the determination, disabling the low SPL mode of the vehicle.

Clause 16: The method of clause 10, wherein the indication is a first indication, wherein the location is a first location, wherein the geofence is a first geofence, wherein the enabling the low SPL mode comprises enabling a first configuration of the low-noise mode, and wherein the method further comprises: receiving a second indication of a second location of the vehicle; determining that the second location of the vehicle corresponds to being within a second geofence; and in response to the determination, enabling a second configuration of the low SPL mode of the ORV.

Clause 17: The method of clause 16, wherein the first configuration of the low SPL mode corresponds to a first municipality, and wherein the second configuration of the low SPL mode corresponds to a second municipality.

Clause 18: The method of any one of clauses 10 through 17, wherein the determination is performed onboard the vehicle.

Clause 19: The method of any one of clauses 10 through 18, further comprising: generating a visual representation of the geofence; and displaying the visual representation.

Clause 20: A vehicle, the vehicle comprising: a frame; one or more seats enclosed by the frame; a plurality of wheels operably coupled to the frame; and a controller, the controller comprising a processor and memory storing instructions that, when executed by the processor, cause the controller to perform a set of operations, the set of operations comprising: receiving an indication of a location of the vehicle; determining that the location of the vehicle corresponds to being within a geofence; and in response to the determination, enabling at least one of a low-speed vehicle (LSV) mode or a low sound pressure level (SPL) mode, thereby restricting operation of the vehicle based on the corresponding geofence.

The description and illustration of one or more aspects provided in this application are not intended to limit or restrict the scope of the disclosure as claimed in any way. The aspects, examples, and details provided in this application are considered sufficient to convey possession and enable others to make and use claimed aspects of the disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

## Claims

1. A method for configuring a low-speed vehicle (LSV) mode of an off-road vehicle (ORV), the method comprising:
receiving an indication of a location of the ORV;
determining that the location of the ORV corresponds to being within a geofence; and
in response to the determination, enabling the LSV mode of the ORV.

2. The method of claim 1, wherein the geofence corresponds to a municipality with one or more LSV regulations, and wherein the LSV mode defines a set of vehicle restrictions corresponding to the one or more LSV regulations of the municipality.

3. The method of claim 2, wherein a restriction of the set of vehicle restrictions includes a maximum allowable speed of the ORV based on the one or more LSV regulations.

4. The method of claim 2, wherein the one or more LSV regulations are stored in a database of LSV regulations that are each mapped to a corresponding geofence, each corresponding geofence being further associated with a respective municipality.

5. The method of claim 1, wherein the indication is a first indication, wherein the location is a first location, and wherein the method further comprises:
receiving a second indication of a second location of the ORV;
determining that the second location of the ORV corresponds to being outside of the geofence; and
in response to the determination, disabling the LSV mode of the ORV.

6. A vehicle, the vehicle comprising:
a frame;
one or more seats enclosed by the frame;
a plurality of wheels operably coupled to the frame; and
a controller, the controller comprising a processor and memory storing instructions that, when executed by the processor, cause the controller to perform a set of operations, the set of operations comprising:
receiving an indication of a location of the vehicle;
determining that the location of the vehicle corresponds to being within a geographic region; and
in response to the determination, enabling a vehicle mode based on the corresponding geographic region.

7. The vehicle of claim 6, wherein the vehicle mode comprises at least one of a low-speed vehicle (LSV) mode or a low sound pressure level (SPL) mode.

8. The vehicle of claim 6, wherein the set of operations further comprises: determining the vehicle mode, based on historical data of what vehicle modes operators use within the geographic region.

9. The vehicle of claim 6, further comprising an in-vehicle display, wherein the set of operations further comprises:
displaying a graphical user interface via the in-vehicle display; and
receiving, via the graphical user interface, input defining a geofence for the geographic region, the input comprising an assignment of the vehicle mode to the geofence.

10. The vehicle of claim 9, wherein the set of operations further comprises:
determining at least one vehicle accessory requirement associated with the geofence;
receiving an indication of at least one accessory associated with the vehicle;
determining a compliance factor of the vehicle; and
enabling the vehicle mode based the corresponding geofence and the compliance factor.

11. The vehicle of claim 6, wherein the vehicle mode comprises a lighting mode of the vehicle.

12. A method for configuring a low sound pressure level (SPL) mode of a vehicle, the method comprising:
receiving an indication of a location of the vehicle;
determining that the location of the vehicle corresponds to being within a geofence; and
in response to the determination, enabling the low SPL mode of the vehicle.

13. The method of claim 12, wherein the geofence corresponds to a municipality with one or more vehicle SPL regulations, and wherein the low SPL mode is configured based on the one or more vehicle SPL regulations of the municipality.

14. The method of claim 13, wherein the enabling the low SPL mode comprises reducing rotations-per-minute (RPM) of an engine of the vehicle.

15. The method of claim 13, wherein the enabling the low SPL mode comprises actuating baffles in an exhaust of the vehicle, thereby muffling noise from the exhaust via the baffles.

16. The method of claim 13, wherein the one or more vehicle SPL regulations are stored in a database of vehicle SPL regulations which are mapped to corresponding geofences, the corresponding geofences being associated with respective municipalities.

17. The method of claim 12, wherein the indication is a first indication, wherein the location is a first location, and wherein the method further comprises:
receiving a second indication of a second location of the vehicle;
determining that the second location of the vehicle corresponds to being outside of the geofence; and
in response to the determination, disabling the low SPL mode of the vehicle.

18. The method of claim 12, wherein the indication is a first indication, wherein the location is a first location, wherein the geofence is a first geofence, wherein the enabling the low SPL mode comprises enabling a first configuration of the low-noise mode, and wherein the method further comprises:
receiving a second indication of a second location of the vehicle;
determining that the second location of the vehicle corresponds to being within a second geofence; and
in response to the determination, enabling a second configuration of the low SPL mode of the ORV.

19. The method of claim 12, wherein the determination is performed onboard the vehicle.

20. The method of claim 12, further comprising:
generating a visual representation of the geofence;
displaying the visual representation; and
editing the geofence, based on the visual representation.
